# EUROPÄISCHE PATENTSCHRIFT

(11) **EP 2 504 138 B1**
(45) Veröffentlichungstag und Bekanntmachung des Hinweises auf die Patenterteilung: **14.06.2023**
(21) Anmeldenummer: 10788244.1
(22) Anmeldetag: 26.11.2010
(51) Int. Cl.: B28B 19/00, B28B 21/72, F16L 9/08, F16L 58/10

(54) **VERFAHREN UND FORM ZUM HERSTELLEN VON BETONROHREN MIT KUNSTSTOFFINNENROHR**
METHOD AND MOULD FOR PRODUCING CONCRETE PIPES HAVING A PLASTIC INNER PIPE
PROCÉDÉ ET MOULE POUR FABRIQUER DES TUBES EN BÉTON AVEC TUBE INTÉRIEUR EN PLASTIQUE

(30) Priorität: 27.11.2009 DE 102009047251; 31.08.2010 DE 102010040043
(43) Veröffentlichungstag der Anmeldung: 03.10.2012
(73) Patentinhaber: Schlüsselbauer, Johann, 4674 Altenhof (AT)
(72) Erfinder: Schlüsselbauer, Johann, 4674 Altenhof (AT)
(74) Vertreter: MERH-IP Matias Erny Reichl Hoffmann Patentanwälte PartG mbB
(86) Internationale Anmeldenummer: PCT/EP2010/007195
(87) Internationale Veröffentlichungsnummer: WO 2011/063979

(56) Entgegenhaltungen:
- JP-A- 11 165 310
- JP-A- 62 071 614
- JP-A- 2001 219 418

## Beschreibung

Die Erfindung betrifft ein Verfahren und eine Form zum Herstellen eines einen Grundkörper aus Beton und ein Kunststoffinnenrohr umfassenden Betonrohrs zum Leiten einer Flüssigkeit, umfassend die Schritte Einbringen eines Formkerns in das Kunststoffinnenrohr, Einbringen des Kunststoffinnenrohrs in eine Außenform und Einfüllen von Beton, insbesondere von selbstverdichten Beton, in einen Zwischenraum zwischen Außenform und Kunststoffinnenrohr zum Formen des Grundkörpers aus Beton, wobei das Kunststoffinnenrohr nach dem Verfestigen des Betons als Innenschalung in dem Grundkörper aus Beton verbleibt und der Formkern nach zumindest teilweisem Verfestigen des Betons entnommen wird, und wobei das Kunststoffinnenrohr einen Innenabschnitt und an beiden Enden jeweils Aufweitungsabschnitte umfasst, die einen größeren Querschnitt als der Innenabschnitt aufweisen.

JP-A-62071614 offenbart ein Verfahren und einen Formkern mit Kunststoffinnenrohr zum Herstellen eines einen Grundkörper aus Beton und ein Kunststoffinnenrohr umfassenden Betonrohrs zum Leiten einer Flüssigkeit, gemäß dem Oberbegriff der Ansprüche 1 und 13.

Weitere gattungsgemäße, einen Grundkörper aus Beton und ein Kunststoffinnenrohr umfassende Betonrohre und ein entsprechendes Herstellungsverfahren derartiger Betonrohre sind dem Stand der Technik insbesondere weiterhin aus der WO 2009/112248 A2 bekannt. Fig. 1 zeigt beispielhaft schematisch eine Perspektivansicht eines aus dem Stand der Technik bekannten, einen Grundkörper aus Beton und ein Kunststoffinnenrohr umfassenden Betonrohrs zum Leiten einer Flüssigkeit und entspricht im Wesentlichen der Fig. 1 der WO 2009/112248 A2.

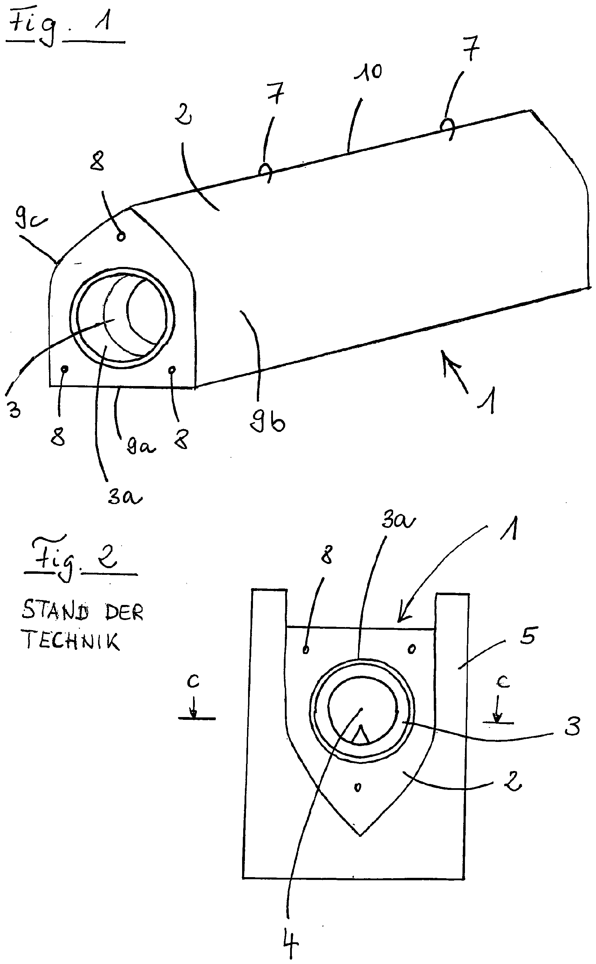

Das in Fig. 1 beispielhaft dargestellte Betonrohr umfasst einen Grundkörper 2 aus Beton, der eine im Wesentlichen gerade Unterseite 9a sowie zwei seitliche Seiten 9b und 9c aufweist, die sich beispielhaft zunächst gerade von der Unterseite 9a nach oben und dann bogenförmig aufeinander zu erstrecken und in der Mitte des Betonrohrs 1 einen Kamm 10 bilden. Im Bereich des Kamms 10 sind in die Oberseite des Betonrohrs 1 als Mittel für den Transport des Betonrohrs 1 beispielhaft Tragschlaufen 7 eingesetzt. In Fig. 1 ist weiterhin zu erkennen, dass das Betonrohr 1 einen im Querschnitt im Wesentlichen kreisförmigen Innendurchmesser aufweist. In das Innere des Betonrohrs 1 ist ein entsprechendes Kunststoffinnenrohr 3, ein sogenannter Inliner eingesetzt beziehungsweise eingebracht, um das Betonrohr vor Korrosion durch die zu leitende Flüssigkeit, zum Beispiel säurehaltiges Abwasser, zu schützen. Speziell schützen derartige Kunststoffinnenrohre weiterhin oberhalb des Fließbereichs des Abwassers vor sich im Abwasser bildenden ätzenden Gasen, sich niederschlagenden Säuren (z.B. biogene Schwefelsäuren) und an den Innenwänden siedelnden Bakterien, die sonst die innere Oberfläche des Betons oberhalb des Abwassers angreifen könnten.

In den beiden Endbereichen des Betonrohrs 1 ist das Kunststoffinnenrohr 3 radial erweitert und umfasst somit in den Endbereichen Aufweitungen 3a. Diese Aufweitungen 3a haben einen im Wesentlichen kreisförmigen Querschnitt, der größer ist als der Querschnitt des Innenabschnitts des Kunststoffinnenrohrs 3, und dienen dazu, bei dem vorgesehenen stirn- bzw. stoßseitigen Zusammensetzen zweier Betonrohre 1 eine Zwischenmuffe bzw. einen Innenrohrstutzen in die stoßseitigen Ausweitungen 3a der Betonrohre 1 einzuführen, so dass sich die Zwischenmuffe bzw. der Innenrohrstutzen somit bei miteinander gestoßenen Betonrohren 1 in beide Rohre hinein erstreckt.

Wie weiterhin in Fig. 1 dargestellt ist, sind die beiden Stirnseiten des Betonrohrs 1 beispielhaft mit drei Aufnahmen 8 für Bolzen versehen, um bei zwei stoßseitig zusammengesetzten Betonrohren 1 die Kräfte zwischen den Betonrohren 1 im Wesentlichen durch die Bolzen aufzunehmen und zugleich eine exakte Positionierung der Betonrohre 1 zueinander gewährleisten. Dies ist im Detail in der WO 2009/112248 A2 beschrieben.

Gemäß der Lehre der WO 2009/112248 A2 werden derartige Betonrohre 1 zum Beispiel liegend in einer Trogschalung als Außenform mit selbstverdichtendem Beton gegossen. Gemäß der allgemeinen Lehre der WO 2009/112248 A2 werden dickwandige Kunststoffinnenrohre 3 verwendet, die selbst als alleinige formgebende Innenschalung für das Betonrohr 1 bei dem Gießvorgang dienen. Nach einer speziellen Ausführungsart des Herstellungsverfahrens nach der
Lehre der WO 2009/112248 A2 wird jedoch weiterhin ein Formkern 4 vor dem Betongießvorgang in das Kunststoffinnenrohr eingebracht, um das Kunststoffinnenrohr 3 im Gießvorgang formgebend zu stabilisieren bzw. abzustützen. Dies ermöglicht die Verwendung von dünnwandigen Kunststoffinnenrohren 3, die ohne Verwendung eines Formkerns 4 unter dem Druck des Betons zusammenfallen würden bzw. verformt würden.

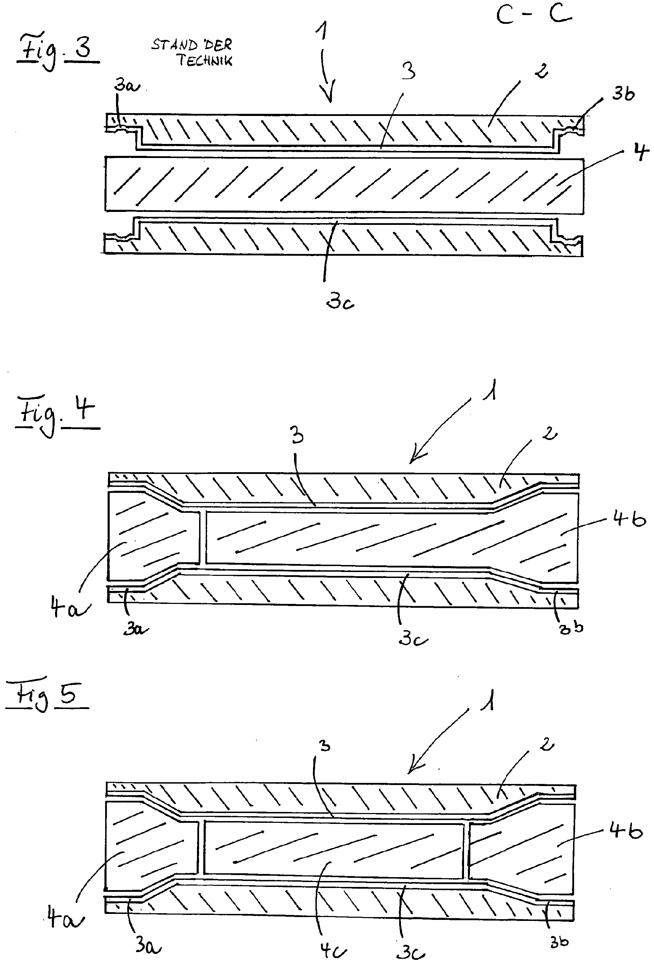

Fig. 2 zeigt schematisch eine Draufsicht eines Betonrohrs 1 gemäß Fig. 1 liegend in einer Außenform 5 ohne stirnseitige Endplatte. Fig. 3 zeigt schematisch einen Längsschnitt (entlang Schnittlinie C-C in Fig. 2) durch einen Grundkörper 2 aus Beton und ein Kunststoffinnenrohr 3 umfassendes Betonrohr 1 gemäß Fig. 1, in welches ein Formkern 4 gemäß der speziellen Ausführungsart des Verfahrens zum Herstellen des Betonrohrs nach der Lehre der WO 2009/112248 A2 eingebracht ist. Insbesondere ist gemäß der Lehre der WO 2009/112248 A2 der Formkern 4 als Spreizkern ausgebildet (siehe auch Fig. 2), der beispielsweise aus einem Stahl- oder Aluminiumrohr besteht, welches mit einem Längsschlitz versehen ist, so dass der Spreizkern im Durchmesser vergrößert und verkleinert werden kann. Die Vergrößerung und Verkleinerung des Durchmessers des Spreizkerns erfolgt dabei beispielsweise durch zur Mitte des Spreizkerns verlaufende Schenkel, die hin und her bewegbar sind. Die Verwendung eines Spreizkerns ist jedoch sehr aufwendig und kostenintensiv.

Fig. 2 und Fig. 3 illustrieren das Prinzip eines Verfahrens zum Herstellen eines einen Grundkörper 2 aus Beton und ein Kunststoffinnenrohr 3 umfassenden Betonrohrs 1 zum Leiten einer Flüssigkeit, das die Schritte Einbringen eines Formkerns 4 in das Kunststoffinnenrohr 3, Einbringen des Kunststoffinnenrohrs 3 in eine Außenform 5 und Einfüllen von Beton in einen Zwischenraum zwischen der Außenform 5 und dem Kunststoffinnenrohr 3 zum Formen des Grundkörpers 2 aus Beton umfasst, wobei das Kunststoffinnenrohr 3 nach dem Verfestigen des Betons als Innenschalung in dem Grundkörper 2 aus Beton verbleibt und der Formkern 4 nach zumindest teilweisem Verfestigen des Betons entnommen wird. Das Kunststoffinnenrohr 3 umfasst einen Innenabschnitt 3c mit einem im Wesentlichen kreisförmigen Querschnitt und an beiden Enden jeweils Aufweitungsabschnitte 3a und 3b, die einen im Wesentlichen kreisförmigen Querschnitt aufweisen, der größer ist, als der Querschnitt des Innenabschnitts 3c.

Insbesondere ist in Fig. 3 dargestellt, dass das Kunststoffinnenrohr 3 an seinen beiden Enden jeweils wie vorstehend beschrieben Aufweitungen 3a und 3b aufweist, die dazu dienen, bei dem Zusammensetzen zweier Betonrohre 1 einen Innenrohrstutzen bzw. eine Zwischenmuffe aufzunehmen. Der Formkern 4 ist jedoch über seine gesamte Länge zylindrisch ausgebildet und weist somit über seine gesamte Länge einen Querschnitt auf, der dem Querschnitt des Innenabschnitts 3a des Kunststoffinnenrohrs 3 entspricht. Somit sind die Aufweitungen 3a und 3b jedoch nicht abgedichtet und Beton kann im Gießvorgang in die Aufweitungen 3a und 3b eindringen und muss nachträglich umständlich entfernt werden. Außerdem ist es nicht möglich, sehr dünnwandige ggf. folienartige Kunststoffinnenrohre 3 zu verwenden, da die Aufweitungen 3a und 3b unter dem Druck des Betons verformt würden.

Der vorliegenden Erfindung liegt die Aufgabe zugrunde, das in der WO 2009/112248 A2 beschriebene Herstellungsverfahren für Betonrohre mit einem Grundkörper aus Beton und einem Kunststoffinnenrohr zu verbessern und ein vorteilhafteres, effizienteres und kostengünstigeres Verfahren zum Herstellen von Betonrohren bereitzustellen. Insbesondere ist eine Aufgabe der vorliegenden Erfindung in diesem Hinblick ein Verfahren zur Herstellung eines einen Grundkörper aus Beton und ein Kunststoffinnenrohr umfassenden Betonrohrs bereitzustellen, bei dem auf kostengünstigere und effizientere Weise besonders haltbare Betonrohre mit dünnwandigen Kunststoffinnenrohren hergestellt werden können.

Des Weiteren wird auf die Druckschriften JP 11-165310 A und JP 2001-219418 A verwiesen.

### Zusammenfassung der Erfindung

Die vorstehend genannten Aufgaben der Erfindung werden erfindungsgemäß durch ein Verfahren zum Herstellen eines einen Grundkörper aus Beton und ein Kunststoffinnenrohr umfassenden Betonrohrs zum Leiten einer Flüssigkeit gemäß Anspruch 1 gelöst. Weiterhin werden ein Formkern gemäß Anspruch 13 und eine Form zum Herstellen eines einen Grundkörper aus Beton und ein Kunststoffinnenrohr umfassenden Betonrohrs zum Leiten einer Flüssigkeit gemäß Anspruch 14 vorgeschlagen. Bevorzugte Ausführungsbeispiele der Erfindung werden durch die abhängigen Ansprüche beschrieben.

Ein Verfahren zum Herstellen eines einen Grundkörper aus Beton und ein Kunststoffinnenrohr umfassenden Betonrohrs zum Leiten einer Flüssigkeit gemäß eines ersten Aspekts der vorliegenden Erfindung umfasst die Schritte Einbringen eines Formkerns in das Kunststoffinnenrohr, Einbringen des Kunststoffinnenrohrs in eine Außenform und Einfüllen von Beton, insbesondere von selbstverdichten Beton, in einen Zwischenraum zwischen Außenform und Kunststoffinnenrohr zum Formen des Grundkörpers aus Beton, wobei das Kunststoffinnenrohr nach dem Verfestigen des Betons als Innenschalung in dem Grundkörper aus Beton verbleibt und der Formkern nach zumindest teilweisem Verfestigen des Betons entnommen wird. Das Kunststoffinnenrohr umfasst einen Innenabschnitt, insbesondere einen Innenabschnitt mit einem im Wesentlichen kreisrunden Querschnitt, und an beiden Enden jeweils Aufweitungsabschnitte, insbesondere radial erweiterte Aufweitungsabschnitte, die einen größeren Querschnitt als der Querschnitt des Innenabschnitts aufweisen.

Die vorliegende Erfindung ist durch die Merkmale der Ansprüche 1 und 13 gekennzeichnet, und zwar, dass der Formkern derart an die Form des Kunststoffinnenrohrs angepasst ist, dass ein Innenabschnitt des Formkerns im Wesentlichen einen Querschnitt entsprechend dem Querschnitt des Innenabschnitts des Kunststoffinnenrohrs aufweist, ein erster Außenabschnitt des Formkerns im Wesentlichen einen Querschnitt entsprechend dem Querschnitt des ersten Aufweitungsabschnitts an dem einem Ende des Kunststoffinnenrohrs aufweist und ein zweiter Außenabschnitt des Formkerns im Wesentlichen einen Querschnitt entsprechend dem Querschnitt des zweiten Aufweitungsabschnitts an dem anderen Ende des Kunststoffinnenrohrs aufweist. Vorzugsweise sind hierbei die Querschnitte des ersten und des zweiten Aufweitungsabschnitts im Wesentlichen gleich.

Der Formkern ist zumindest zweiteilig ausgebildet und ein erstes Formkernteil des zumindest zweiteiligen Formkerns umfasst den ersten Außenabschnitt des Formkerns und ein zweites Formkernteil des zumindest zweiteiligen Formkerns umfasst den zweiten Außenabschnitt des Formkerns.

Der Formkern ist somit im Gegensatz zum Stand der Technik, insbesondere im Gegensatz zu der Lehre der WO 2009/112248 A2, mehrteilig ausgebildet. Die äußeren Abschnitte des mehrteiligen Formkerns werden durch ein erstes und ein zweites Formkernteil gebildet, die im Wesentlichen einen Querschnitt entsprechend dem Querschnitt der Aufweitungsabschnitte an den Ende des Kunststoffinnenrohrs aufweisen und somit die Aufweitungen im Gegensatz zum Stand der Technik vorteilhaft gegen das Eindringen von flüssigem Beton beim Einfüllen von Beton abdichten. Somit ist der Formkern vorteilhaft im Bereich des ganzen Kunststoffinnenrohrs an die Form des Kunststoffinnenrohrs angepasst und zusätzliche Abdichtungsmittel neben dem Formkern sind nicht erforderlich. Während des Gießvorgangs werden auch die Aufweitungsbereiche des Kunststoffinnenrohrs vorteilhaft gegen den Druck des Betons gestützt und formgebend stabilisiert, so dass eine unvorteilhafte und unerwünschte Verformung der Aufweitungsbereiche an den Enden des Kunststoffinnenrohrs unter dem Druck des Betons vermieden werden kann.

Da der mehrteilige Formkern gemäß der vorliegenden Erfindung entlang seiner gesamten Länge an den Querschnitt des Kunststoffinnenrohrs angepasst ist, also insbesondere am Innenabschnitt dem Querschnitt des Innenabschnitts des Kunststoffinnenrohrs und an den Enden jeweils dem Querschnitt der Aufweitungsbereiche, kann das Kunststoffinnenrohr somit vorteilhaft entlang seiner gesamten Länge entsprechend dem jeweiligen gewünschten Querschnitt formgebend stabilisiert und gestützt werden.

Weiterhin ergibt sich gegenüber dem Stand der Technik der besondere Vorteil, dass die Aufweitungen an den Enden des Kunststoffinnenrohrs direkt bei dem Schritt Einbringen des Formkerns in das Kunststoffinnenrohr, insbesondere bei dem Einbringen des äußeren ersten bzw. zweiten Formkernteils mit den Außenabschnitten des Formkerns in das Kunststoffinnenrohr, ausgeformt, ausgebildet bzw. fertig ausgebildet werden können, z.B. wenn diese vor der Herstellung des Betonrohrs noch nicht bereits in dem Kunststoffinnenrohr vorgefertigt bzw. nur teilweise ausgebildet sind.

Dies hat insbesondere den Vorteil, dass die Form der Aufweitungen direkt durch die Form der Außenabschnitte des ersten und zweiten Formkernteils vorgegeben wird, so dass die Formkernteile bei dem Gießvorgang, in dem sie formgebend stabilisieren, vorteilhaft exakt an die Form der Aufweitungen angepasst sein können. Somit kann die Form der Öffnung der Aufweitungsbereiche, vorzugsweise die im Wesentlichen kreisförmige Form der Öffnung der Aufweitungsbereiche, vorteilhaft exakt ausgebildet werden. Dies ist insbesondere für die möglichst exakte Passung und Abdichtung durch die Zwischenmuffen bzw. Innenrohrstutzen beim Zusammensetzen von zwei Betonrohren von Vorteil,

Außerdem bringt die Ausformung der Aufweitungen an den Enden des Kunststoffinnenrohrs beim Einführen der äußeren Formkernteile des Formkerns den weiteren Vorteil, dass ein besonders effizientes Verfahren bereitgestellt wird, da ein aufwendiges Vorfertigen des Kunststoffinnenrohrs einschließlich dem Ausbilden beziehungsweise Ausformen der Aufweitungsbereiche in der Vorfertigung nicht erforderlich ist.

In dem Schritt Einfüllen von Beton in die Außenform wird vorzugsweise selbstverdichtender Beton verwendet. Es kann aber auch herkömmlicher Beton verwendet werden, wobei die Form dann nach Einfüllen des Betons zum Verfestigen des Betons gerüttelt wird. Das Verdichten eines nicht-selbstverdichtenden Betons kann zum Beispiel über Vibrationen des Formkerns und/oder der Außenform erfolgen (sog. "Vibrationsverdichtung"). Es ist ebenso möglich, derartige Vibrationen zum Verdichten des Betons über Mittel direkt im Beton zu erzeugen, zum Beispiel über sogenannte Flaschenrüttler.

Der Formkern kann zweiteilig ausgebildet sein, wobei das erste oder das zweite Formkernteil vorzugsweise im Wesentlichen den Innenabschnitt des Formkerns umfasst. Somit umfasst der Formkern im Wesentlichen ein kurzes Formteil, das im Wesentlichen einen Außenabschnitt des Formkerns umfasst, und ein langes Formkernteil, das im Wesentlichen den Innenabschnitt des Formkerns und den anderen Außenabschnitt des Formkerns umfasst.

Dies hat den Vorteil, dass der Innenabschnitt des Formkerns bei dem Innenabschnitt des Kunststoffinnenrohrs im Wesentlichen durch einen Abschnitt eines einzigen Formkernteils gebildet ist und keine Anschlussflächen zweier Formkernteile aufweist. Somit ist der Innenabschnitt des Formkerns besonders stabil ausgebildet und kann den Innenabschnitt des Kunststoffinnenrohrs vorteilhaft gegen die großen Auftriebskräfte des Betons besonders formstabil stützen und stabilisieren.

Vorzugsweise ist der Innenabschnitt des Formkerns hierbei im Wesentlichen zylindrisch ausgebildet. Dennoch kann der Innenabschnitt trotz der im Wesentlichen zylindrischen Ausbildung sich minimal verjüngend, insbesondere konisch, ausgebildet sein oder zumindest einen sich minimal verjüngenden, insbesondere konisch, ausgebildeten Abschnitt umfassen. Hierbei ist die minimale Verjüngung beziehungsweise die minimale Konizität im Vergleich zu der im Wesentlichen zylindrischen Ausbildung vorzugsweise im Wesentlichen kleiner oder gleich 1 mm pro Laufmeter, vorzugsweise im Wesentlichen kleiner oder gleich 0,5 mm pro Laufmeter. Dies ermöglicht weiterhin die Einsetzbarkeit des Betonrohres für beide Fließrichtungen. Die minimale Verjüngung erleichtert einerseits das Einbringen des Formkerns und insbesondere andererseits das Entfernen aus der zumindest teilweise verfestigten Form, d.h. bei Entfernen des Formkerns. Die aufwendige und kostenintensive Verwendung eines Spreizkerns ist somit nicht erforderlich.

Nach einer besonders vorteilhaften Ausführungsform des Verfahrens nach der vorliegenden Erfindung ist der Formkern zumindest dreiteilig ausgebildet und vorzugsweise umfasst der Innenabschnitt des Formkerns neben dem ersten und zweiten Formkernteilen weiterhin zumindest ein mittleres drittes Formkernteil.

Dies hat den Vorteil, dass ein weiteres mittleres drittes Formkernteil mit im Wesentlichem konstantem Querschnitt entsprechend dem Querschnitt des Innenabschnitts des Formkerns, also im Wesentlichen entsprechend dem Innenabschnitt des Kunststoffinnenrohrs bereitgestellt wird, um den Innenabschnitt des Kunststoffinnenrohrs formgebend und stabilisierend zu stützen. Hierbei kann das dritte Formkernteil ggf. vor dem Einbringen des ersten und des zweiten Formkernteils bereits in das Kunststoffinnenrohr eingebracht werden, um den im Verhältnis zu den Aufweitungsbereichen an den Enden des Kunststoffinnenrohrs längeren Innenabschnitt des Kunststoffinnenrohrs formgebend zu stabilisieren, noch bevor das erste und zweite Formkernteil in das Kunststoffinnenrohr eingebracht werden, ggf. zum gleichzeitigem Ausbilden beziehungsweise Ausformen der Aufweitungsabschnitte bei dem Einführen dieser äußeren Formkernteile. Ist der Innenabschnitt des Formkerns im Wesentlichen durch das mittlere dritte Formkernteil gebildet, kann der Innenabschnitt des Kunststoffinnenrohrs besonders vorteilhaft durch das mittlere dritte Formkernteil gegen die großen Auftriebskräfte des Betons formstabil gestützt und stabilisiert werden. Vorzugsweise ist das zumindest eine mittlere dritte Formkernteil im Wesentlichen zylindrisch ausgebildet.

Vorzugsweise ist das dritte Formkernteil, ggf. trotz der im Wesentlichen zylindrischen Ausbildung, sich minimal verjüngend, insbesondere minimal konisch, ausgebildet oder umfasst vorzugsweise zumindest einen sich minimal verjüngend, insbesondere minimal konisch, ausgebildeten Abschnitt. Dies hat den Vorteil, dass das mittlere dritte Formkernteil mit der dünneren Seite der sich verjüngenden, insbesondere konischen Form voran in das Kunststoffinnenrohr beziehungsweise in den Innenabschnitt des Kunststoffinnenrohrs eingefädelt werden kann. Hierbei ist die minimale konische Form jedoch insbesondere so ausgebildet, dass das mittlere dritte Formkernteil weiterhin über die gesamte Länge im Wesentlichen einen Querschnitt entsprechend dem Querschnitt des Innenabschnitts des Kunststoffinnenrohrs aufweist. Die minimale Verjüngung beziehungsweise die minimale Konizität im Vergleich zu der im Wesentlichen zylindrischen Ausbildung ist hierbei vorzugsweise im Wesentlichen kleiner oder gleich 1 mm pro Laufmeter, vorzugsweise im Wesentlichen kleiner oder gleich 0,5 mm pro Laufmeter. Dies ermöglicht weiterhin die Einsetzbarkeit des Betonrohres für beide Fließrichtungen. Die
Verjüngung erleichtert einerseits das Einbringen des Formkerns wie vorstehend beschrieben und insbesondere andererseits das Entfernen aus der zumindest teilweise Verfestigten Form, d.h. bei Entfernen des Formkerns. Die aufwendige und kostenintensive Verwendung eines Spreizkerns ist somit nicht erforderlich.

Vorzugsweise ist bei dem Schritt Einbringen des Formkerns ein Einführhilfsformteil an ein Formkernteil des Formkerns zum Einführen des Formkernteils in das Kunststoffinnenrohr angebracht, wobei das Einführhilfsformteil vorzugsweise eine sich verjüngende Form, insbesondere eine konische Form, aufweist und vorzugsweise nach dem Einbringen des Formkernteils in das Kunststoffinnenrohr wieder entfernt wird. Somit kann das Einfädeln eines Formkernteils beim Einbringen des Formkerns in das Kunststoffinnenrohr weiter vereinfacht werden.

Vorzugsweise weist das Kunststoffinnenrohr vor dem Einbringen des Formkerns in das Kunststoffinnenrohr einen im Wesentlichen konstanten Querschnitt auf und der Schritt des Einbringens des Formkerns in das Kunststoffinnenrohr umfasst vorzugsweise einen Schritt des Ausformens der Aufweitungsabschnitte an den Enden des Kunststoffinnenrohrs mittels Einführen der Außenabschnitte des Formkerns.

Wie bereits vorstehend beschrieben, ermöglicht das Verfahren nach der vorliegenden Erfindung vorteilhaft das Ausbilden bzw. Ausformen der radialen Aufweitungsbereiche an den Enden des Kunststoffinnenrohrs beim Einführen der äußeren Formkernteile während des Einbringens des Formkerns. Das Kunststoffinnenrohr hat hierbei vor dem Einbringen des Formkerns einen im Wesentlichen konstanten Querschnitt, wobei insbesondere die Aufweitungen an den Enden des Kunststoffinnenrohrs noch nicht bzw. nur teilweise ausgebildet sind. Durch Einführen der äußeren Formkernteile des Formkerns, die einen Querschnitt im Wesentlichen entsprechend dem späteren Querschnitt der Aufweitungen aufweisen, können die Aufweitungen ausgebildet, ausgeformt bzw. fertig ausgeformt werden.

Diese Aufweitung kann durch ein Aufweiten des Kunststoffs durch rein mechanische Kraftaufbringung erfolgen, wobei die Vermeidung der Rückbildung der aufgeweiteten Enden des Kunststoffinnenrohrs nach dem Gießvorgang und insbesondere nach Entnahme des Formkerns durch den Formschluss mit dem Beton des Grundkörpers erfolgen kann. Besonders vorteilhaft werden die Aufweitungen an den Enden des Kunststoffinnenrohrs jedoch vorzugsweise thermoplastisch ausgebildet, wobei vor Einführen der äußeren Formkernteile jedoch ggf. nach Einführen eines mittleren dritten Formkernteils zumindest die Enden des Kunststoffinnenrohrs erhitzt werden, z.B. durch Bestrahlung mit Wärme oder Zufuhr von Heißluft, um den Kunststoff thermoplastisch verformbar zu machen. Nach Abkühlen und nach Entnahme des Kerns verharren die Aufweitungen dann im Wesentlichen in der ausgebildeten Form.

Vorzugsweise entspricht ein innerer Abschnitt des ersten und des zweiten Formkernteils jeweils einem äußeren Abschnitt des Innenabschnitts des Formkerns, d.h. das erste und das zweite Formkernteil umfassen vorzugsweise jeweils einen inneren Abschnitt, der im Wesentlichen einen Querschnitt entsprechend dem Querschnitt des Innenabschnitts des Kunststoffinnenrohrs aufweist. Der innere Abschnitt des ersten bzw. des zweiten Formkernteils geht vorzugsweise jeweils in einem an den Innenabschnitt anschließenden weiteren Abschnitt des ersten bzw. zweiten Formkernteils kontinuierlich, insbesondere konisch, in den jeweiligen Außenabschnitt des ersten bzw. zweiten Formkernteils über.

Vorzugsweise umfasst der Schritt des Einbringens des Formkerns in das Kunststoffinnenrohr die Schritte Einführen des inneren Abschnitts des ersten Formkernteils in das Kunststoffinnenrohr an dem einen Ende des Kunststoffinnenrohrs und/oder Einführen des inneren Abschnitts des zweiten Formkernteils in das Kunststoffinnenrohr an dem anderen Ende des Kunststoffinnenrohrs, Erhitzen des Kunststoffinnenrohrs zumindest an dem einen Ende, in das der innere Abschnitt des ersten Formkernteils eingebracht ist, und/oder Erhitzen des Kunststoffinnenrohrs zumindest an dem anderen Ende, in das der innere Abschnitt des zweiten Formkernteils eingebracht ist, und Einführen des Außenabschnitts des ersten Formkernteils in das Kunststoffinnenrohr zum thermoplastischen Ausformen des ersten Aufweitungsabschnitts des Kunststoffinnenrohrs an dem einen Ende nach Erhitzen und/oder Einführen des Außenabschnitts des zweiten Formkernteils in das Kunststoffinnenrohr zum thermoplastischen Ausformen des zweiten Aufweitungsabschnitts des Kunststoffinnenrohrs an dem anderen Ende nach Erhitzen. Vorzugsweise erfolgt hierbei der Schritt Erhitzen des Kunststoffinnenrohrs an dem einen und/oder anderen Ende des Kunststoffinnenrohrs durch außenseitige und/oder innenseitige Wärmebestrahlung und/oder außenseitige und/oder innenseitige Zufuhr von Heißluft.

Das Kunststoffinnenrohr ist aus einer Kunststofffolie gebildet, die zu dem Kunststottinnenrohr geschweißt sein kann, insbesondere nach Zuschnitt der Kunststofffolie in Abhängigkeit des Querschnitts des Innenabschnitts des Kunststoffrohrs. Dies ermöglicht vorteilhaft eine hohe Flexibilität bezüglich der Herstellung des Kunststoffinnenrohrs bei Zuschnitt einer Kunststofffolie einer gewünschten Folienstärke angepasst an den gewünschten Querschnitt des Kunststoffinnenrohrs, wobei die Kunststofffolie vorteilhaft gleichmäßig dichtend z.B. entlang der Längsrichtung des Kunststoffinnenrohrs zu dem Kunststoffinnenrohr geschweißt werden kann.

Das Verfahren umfasst vorzugsweise weiterhin die Schritte Zuschneiden der Kunststofffolie in Abhängigkeit des Querschnitts des Innenabschnitts des Kunststoffinnenrohrs und/oder in Abhängigkeit einer Länge des Betonrohres und Zusammenschweißen der Kunststofffolie zu dem Kunststoffinnenrohr.

Vorzugsweise wird die Kunststoffinnenfolie hierbei zu dem Kunststoffinnenrohr stumpfgeschweißt. Stumpfschweißen ist insbesondere dann von Vorteil, wenn direkt nach Zuschnitt der Kunststofffolie geschweißt wird. Jedoch ist es weiterhin möglich, die Kunststoffinnenfolie mit überlappenden Seiten zu dem Kunststoffinnenrohr zu verschweißen. Das überlappende Material kann dann vorzugsweise durch Verschmelzen oder nachträgliches Entfernen von Überständen entfernt werden. Dies ist vor Allem dann vorteilhaft, wenn die Stoßenden der Kunststofffolie nicht präzise genug ausgebildet sind oder wenn die Kunststofffolie nicht direkt nach dem Zuschnitt zu dem Kunststoffinnenrohr geschweißt wird, da die Stoßenden der Kunststofffolie bei Lagerung zu geringfügigen Formveränderungen neigen. Weiterhin kann auch unter Zuführen von Material geschweißt werden, z. B. durch Erzeugen einer Schweißnaht.

Vorzugsweise weist das Kunststoffinnenrohr außenseitig eine Vielzahl von Noppen zum Verankern des Kunststoffinnenrohrs nach dem zumindest teilweisen Verfestigen des Betons in dem Grundkörper aus Beton auf, insbesondere vor Entnahme des Formkerns. Dies hat den Vorteil, dass das Kunststoffinnenrohr in der gewünschten Form mittels der außenseitigen Noppen bei Verfestigen des Betons formstabil in dem Betongrundkörper des Betonrohrs verankert wird und sich nach Entnahme des Formkerns im Wesentlichen nicht mehr unerwünscht verformt und insbesondere den gewünschten Querschnitt im fertigen Betonrohr beibehält. Weiterhin wird der Grundkörper aus Beton durch die Verankerung mit den Noppen des Kunststoffinnenrohrs stabilisiert und etwaige spätere Beschädigungen des Grundkörpers können ausgeglichen werden, was eine längere Haltbarkeit des Betonrohrs ermöglicht.

Vorzugsweise ist die Dichte der Noppen, d. h. die Dichte der Noppen in einer Einheit proportional zu der Anzahl der Noppen pro Außenflächeneinheit des Kunststoffinnenrohrs, z. B. Noppen pro Quadratzentimeter, im Bereich der Enden des Kunststoffinnenrohrs, insbesondere im Bereich der Aufweitungsabschnitte, größer als die Dichte der Noppen im Bereich des Innenabschnitts des Kunststoffinnenrohrs. Dies hat den Vorteil, dass das Kunststoffinnenrohr den gewünschten Querschnitt gerade im Bereich der Aufweitungsabschnitte besonders exakt beibehält, z. B. mit einem im Wesentlichen kreisförmigen Querschnitt, um eine exakte Passung und Abdichtung mit einer Zwischenmuffe bzw. einem Innenrohrstutzen für das Zusammensetzen zweier Betonrohre zu ermöglichen. Am Innenabschnitt des Kunststoffinnenrohrs kann jedoch eine geringere Noppendichte vorhanden sein, wodurch erhebliche Materialeinsparungen zur Kostenreduktion erreicht werden können.

Vorzugsweise sind die Noppen pilzförmig ausgebildet oder weisen einen im Wesentlichen v-förmigen bzw. y-förmigen Querschnitt auf. Diese Ausführungsformen der Noppenform weisen eine besonders vorteilhafte Verankerung im Beton des Grundkörpers auf. Vorzugsweise weisen die Noppen, z.B. wenn sie einen im Wesentlichen v-förmigen bzw. y-förmigen Querschnitt aufweisen, weiterhin einen oder mehrere Querstege auf. Dies hat den Vorteil, dass die v-förmigen bzw. y-förmigen Noppen besser und langhaltiger in dem Beton des Grundkörpers verankert werden können.

Vorzugsweise umfasst der Schritt Einbringen des Formkerns in das Kunststoffinnenrohr weiterhin den Schritt Fixieren von außenseitigen Noppen zumindest an einem Ende des Kunststoffinnenrohrs zum Erzeugen eines Widerhalts beim Aufziehen des Kunststoffinnenrohrs auf zumindest ein Formkernteil des mehrteiligen Formkerns, insbesondere auf das mittlere dritte Formkernteil, an dem Ende des Kunststoffinnenrohrs bzw. beim Einführen zumindest eines Formkernteils des mehrteiligen Formkerns, insbesondere des mittleren dritten Formkernteils, in das Kunststoffinnerrohr an dem Ende des Kunststoffinnenrohrs.

Somit bieten die Noppen auf der Außenseite des Kunststoffinnenrohrs den weiteren Vorteil, dass sie als Mittel zum Aufbringen bzw. Erzeugen eines Gegenhalts bzw. Widerhalts beim Aufziehen des Kunststoffinnenrohrs auf ein Formkernteil, z.B. das mittlere dritte Formkernteil, an dem Ende des Kunststoffinnenrohrs bzw. beim Einführen eines Formkernteils, z.B. des mittleren dritten Formkernteils, in das Kunststoffinnerrohr an dem Ende des Kunststoffinnenrohrs verwendet werden können. Insbesondere kann vorteilhaft ein Widerhalterzeugungsmittel zum Fixieren der Noppen zumindest auf einer Seite eines Endes des Kunststoffinnenrohrs verwendet werden, das zumindest einseitig und zumindest teilweise bereits im Wesentlichen einen Querschnitt entsprechend dem Querschnitt des Innenabschnitts des Kunststoffinnenrohrs bzw. z.B. des dritten Formkernteils vorgibt, um so das Einführen des dritten Formkernteils zu vereinfachen.

Nach einem bevorzugten Ausführungsbeispiel der vorliegenden Erfindung, das sich insbesondere zur Herstellung eines Vortriebsbetonrohrs eignet, ist die Außenform eine stehende Außenform, in der das Betonrohr stehend gefertigt wird, wobei der Querschnitt der Außenform vorzugsweise im Wesentlichen kreisförmig, ellipsenförmig oder eiförmig ist. Im stehenden Herstellungsverfahren wird das Betonrohr vorzugsweise in Überlänge hergestellt und das Verfahren umfasst vorzugsweise einen Schritt Ablängen des Betonrohrs auf eine gewünschte Länge durch Abtrennen eines oberen Überstandabschnitts des Betonrohrs. Dies hat den Vorteil, dass ein Überstandsabschnitt des Betonrohrs bzw. ein Überstandsabschnitt des Grundkörpers aus Beton abgetrennt werden kann, in dem sich im Beton aufgestiegene Gasbläschen gesammelt haben können. Bei stehender Herstellung des Betonrohres kann des Weiteren zwischen Außenform und Kunststoffinnenrohr eine Bewehrung eingebracht sein, z.B. in Form einer Netz-, Gerüst- oder Korbkonstruktion, z.B. aus Stahl, um den Grundkörper aus Beton von innen zu stabilisieren.

Nach einem alternativen bevorzugten Ausführungsbeispiel der vorliegenden Erfindung ist die Außenform eine liegende Trogschalung, in der das Betonrohr liegend gegossen wird. Die Verwendung einer Trogschalung als Außenform ist eine bevorzugte Ausführungsform des erfindungsgemäßen Verfahrens, da das Betonrohr liegend in der Trogschalung gefertigt werden kann und somit z.B. auf besonders einfache Weise eine im Wesentlichen ebenflächige Unterseite des Betongrundkörpers ausgebildet werden kann. Die Verwendung einer Trogschalung als Außenform ist aus der WO 2009/112248 A2 bekannt.

Vorzugsweise wird die Außenform bzw. insbesondere die Trogschalung im Schritt Einbringen des Kunststoffinnenrohrs in eine Außenform, insbesondere vor Einfüllen des Betons, stirnseitig durch Stirnwände verschlossen, wobei die Stirnwände vorzugsweise jeweils Mittel zum stirnseitigen Befestigen und Zentrieren des Formkerns in der Trogschalung bzw. in der Außenform aufweisen.

Nach einem weiteren alternativen bevorzugten Ausführungsbeispiel der vorliegenden Erfindung ist die Außenform eine liegende Außenform mit auf- und zuklappbaren Längsseiten, in der das Betonrohr bei geschlossenen bzw. zugeklappten Längsseiten liegend gegossen wird.

Die Verwendung einer liegenden Außenform mit klappbaren Längsseiten als Außenform ist eine besonders bevorzugte Ausführungsform des erfindungsgemäßen Verfahrens, da das Betonrohr entsprechend der späteren Einbaulage des Betonrohrs gegossen werden kann, d.h. mit den sich verjüngenden Seiten des Betonrohrs nach oben ausgerichtet. Somit kann auf besonders einfache Weise eine besonders präzise geformte Unterseite des Betongrundkörpers ausgebildet werden, da ein Bodenteil der Außenform als präzise ausgeformte Negativform der Unterseite des Betongrundkörpers ausgebildet werden kann. Zum Entfernen des Betonrohrs aus der Außenform können die Längsseiten aufgeklappt werden. Dies ist bei einer einteiligen Trogschalung mit feststehenden Seitenwänden, wie sie aus der WO 2009/112248 A2 bekannt ist, nicht möglich.

Vorzugsweise wird die Außenform mit klappbaren Längsseiten im Schritt Einbringen des Kunststoffinnenrohrs in eine Außenform stirnseitig durch Stirnwände verschlossen, wobei die Stirnwände vorzugsweise jeweils Mittel zum Zentrieren des Formkerns aufweisen.

Vorzugsweise wird bei dem Schritt Einfüllen von Beton in einen Zwischenraum zwischen Außenform und Kunststoffinnenrohr zum Formen des Grundkörpers Faserbeton verwendet. Dies hat den Vorteil, dass die Fasern in dem Faserbeton ähnlich zu der Wirkung einer Bewehrung im Grundkörper den Grundkörper aus Beton stabilisieren und widerstandsfähiger gegen mechanische Beanspruchung machen.

Vorzugsweise ist der Querschnitt des Innenabschnitts des Kunststoffinnenrohrs bzw. der Außenabschnitte des Kunststoffinnenrohrs im Wesentlichen kreisförmig, ellipsenförmig oder eiförmig.

Insbesondere sei darauf hingewiesen, dass die vorliegende Erfindung die Herstellung von einen Grundkörper aus Beton und ein Kunststoffinnenrohr umfassenden Betonrohren betrifft, die dazu geeignet sind, eine Flüssigkeit (ggf. ein gasförmiges Fluid) zu leiten, z.B. in einer Freispiegelleitung, d.h. durch Gefälle, oder durch Druck in einer Druckleitung (z.B. mittels einer Druckpumpe).

Vorzugsweise weisen die Aufweitungsabschnitte eine im Wesentlichen glatte Innenfläche auf und sind dazu geeignet, eine Zwischenmuffe (bzw. einen Innenrohrstutzen) aufzunehmen, die an den Querschnitt der Aufweitungsabschnitte angepasst ist und außenseitig ein Dichtungsmittel, insbesondere einen Dichtungsring aufweist. Dies ist insbesondere dann vorteilhaft, wenn die Aufweitungsabschnitte direkt durch das Einbringen der äußeren Formkernteile ausgebildet werden, da die Herstellung somit vereinfacht werden kann, da keine Dichtungssitze in den Aufweitungsabschnitten ausgebildet werden müssen, wie es nach der Lehre der WO 2009/112248 A2 erforderlich ist. Ein Dichtmittel, wie z.B. ein oder mehrere Dichtungsringe kann dann auf einer Zwischenmuffe vorgesehen werden, die beim Zusammensetzen zweier Betonrohre in die Aufweitungsabschnitte eingebracht wird.

Nach einem zweiten Aspekt wird ein Formkern bereitgestellt, der derart an die Form eines Kunststoffinnenrohrs angepasst ist, dass ein Innenabschnitt des Formkerns im Wesentlichen einen Querschnitt entsprechend dem Querschnitt eines Innenabschnitts des Kunststoffinnenrohrs aufweist, ein erster Außenabschnitt des Formkerns im Wesentlichen einen Querschnitt entsprechend dem Querschnitt eines ersten Aufweitungsabschnitts an einem Ende des Kunststoffinnenrohrs aufweist und ein zweiter Außenabschnitt des Formkerns im Wesentlichen einen Querschnitt entsprechend dem Querschnitt eines zweiten Aufweitungsabschnitts an einem anderen Ende des Kunststoffinnenrohrs aufweist, wobei der Formkern zumindest zweiteilig ausgebildet ist und ein erstes Formkernteil des zumindest zweiteiligen Formkerns den ersten Außenabschnitt umfasst und ein zweites Formkernteil des zumindest zweiteiligen Formkerns den zweiten Außenabschnitt umfasst. Der Formkern kann nach bevorzugten Ausführungsbeispielen derart ausgestaltet sein, wie es im Zusammenhang mit den vorstehend genannten Verfahrensaspekten beschrieben ist.

Nach einem dritten Aspekt wird eine Form zum Herstellen eines einen Grundkörper aus Beton und ein Kunststoffinnenrohr umfassenden Betonrohrs zum Leiten einer Flüssigkeit gemäß einem Verfahren des vorstehend beschriebenen ersten Aspekts der vorliegenden Erfindung bereitgestellt. Die Form umfasst eine Außenform und einen Formkern, insbesondere einem Formkern, der dazu geeignet ist, in ein Kunststoffinnenrohr eingebracht zu werden.

Die Form ist dadurch gekennzeichnet, dass der Formkern derart an die Form des Kunststoffinnenrohrs angepasst ist, dass ein Innenabschnitt des Formkerns im Wesentlichen einen Querschnitt entsprechend dem Querschnitt des Innenabschnitts des Kunststoffinnenrohrs aufweist, ein erster Außenabschnitt des Formkerns im Wesentlichen einen Querschnitt entsprechend dem Querschnitt des ersten Aufweitungsabschnitts an dem einem Ende des Kunststoffinnenrohrs aufweist und ein zweiter Außenabschnitt des Formkerns im Wesentlichen einen Querschnitt entsprechend dem Querschnitt des zweiten Aufweitungsabschnitts an dem anderen Ende des Kunststoffinnenrohrs aufweist, wobei der Formkern zumindest zweiteilig ausgebildet ist und ein erstes Formkernteil des zumindest zweiteiligen Formkerns den ersten Außenabschnitt umfasst und ein zweites Formkernteil des zumindest zweiteiligen Formkerns den zweiten Außenabschnitt umfasst.

Nach einem vierten Aspekt wird eine Außenform einer Form zum Herstellen eines einen Grundkörper aus Beton und ein Kunststoffinnenrohr umfassenden Betonrohrs zum Leiten einer Flüssigkeit gemäß einem Verfahren des vorstehend beschriebenen ersten Aspekts der vorliegenden Erfindung bereitgestellt.

Die im Folgenden beschriebenen bevorzugten Merkmale betreffen die Form des vorstehend genannten dritten Aspekts der vorliegenden Erfindung und die Außenform des vorstehend genannten vierten Aspekts der vorliegenden Erfindung.

Vorzugsweise ist die Außenform eine liegende Außenform, die zwei stirnseitige Stirnwände mit Mitteln zum Halten des Formkerns, zwei längsseitige Seitenwände und ein Bodenteil umfasst, wobei vorzugsweise an dem Bodenteil die zwei Seitenwände zum Öffnen und Schließen der Außenform mittels jeweils eines oder mehrerer Gelenke klappbar angebracht sind.

Durch die bevorzugte Ausgestaltung der Außenform als Außenform mit klappbaren Seitenwänden kann die Entnahme des zumindest teilweise verfestigten Betonrohres erheblich vereinfacht werden. Das Betonrohr wird in der Außenform bei geschlossenen bzw. zugeklappten Seitenwänden gegossen und nach zumindest teilweisem Verfestigten des Betons können die Seitenwände aufgeklappt werden, woraufhin das zumindest teilweise verfestigte Betonrohr einfach entnommen werden kann.

Bei der liegenden Herstellung von Betonrohren mit Fuß (sog. Fußrohre) in umgekehrter Einbaulage, wie z.B. in Fig. 2 dargestellt und wie aus der WO 2009/112248 A2 bekannt, im Gießverfahren in einer Trogschalung, ergibt sich außerdem der Nachteil, dass bedingt durch die Trogform die Breite der Öffnung des Trogs und auch die Breite des Rohrfußes mindestens dem Außendurchmesser des Betonrohres entsprechen muss, damit das Rohr nach oben aus dem Trog entschalt werden kann. Dieser breite Fuß trägt jedoch kaum zur Verbesserung der Statik des Rohres bei, erhöht aber durch den hohen Betoneinsatz die Kosten und das Gewicht.

Durch die vorteilhafte Lösung mit einer Außenform mit klappbaren Seitenwänden kann der Fuß des Rohres unabhängig von dem Rohrdurchmesser schmaler dimensioniert werden, da für die Entschalung des Betonrohres die Möglichkeit der Vergrößerung der Entnahmeöffnung durch das Aufklappen der Seitenwände der Außenform bereitgestellt wird.

Bei der Verwendung von Trogschalungen kann es vorkommen, dass die Betonrohre aufgrund der feststehenden Seitenwände schwer entschalbar sind, wobei gegebenenfalls ein aufwendiges Festhalten der Außenform erforderlich ist, um das Betonrohr entnehmen zu können. Bei geringen Unregelmäßigkeiten der Trogform (z. B. durch Beschädigungen bzw. Abnutzung) ist es sogar denkbar, dass sich das Rohr überhaupt nicht entschalen lässt, wobei nicht nur das Betonrohr selbst sondern zusätzlich die Außenform verloren ist.

Eine Außenform mit klappbaren Seitenwänden erleichtert gegenüber einer Trogform zudem die Reinigung der Außenform nach Entnahme des Betonrohres, da Betonreste durch den Schlitz zwischen Seitenwand und Botenteil gewischt werden können.

Zusammenfassend ermöglicht es eine Außenform mit klappbaren Seitenwänden, den Fuß des Rohres vorteilhaft schlanker auszuführen, wodurch Material und somit Kosten eingespart werden können, und erleichtert zudem grundsätzlich die Entschalung.

Nach einem bevorzugten Ausführungsbeispiel ist zumindest eine der Stirnwände zum stirnseitigen Öffnen und Schließen der Außenform mittels eines oder mehrerer Gelenke klappbar an dem Bodenteil angebracht.

Nach einem alternativen bevorzugten Ausführungsbeispiel ist zumindest eine der Stirnwände zum stirnseitigen Öffnen und Schließen der Außenform in Längsrichtung der Außenform verfahrbar. Vorzugsweise ist die zumindest eine verfahrbare Stirnwand an einem verfahrbaren Wagen angebracht. Durch die Verfahrbarkeit der zumindest einen Stirnwand wird das Einbringen des Formkerns in die Außenform vereinfacht, da der Formkern zuerst eingebracht werden kann und dann die Zentrier- bzw. Haltemittel (insbesondere Zentrierdorne) für den Formkern an der Innenseite der zumindest einen Stirnwand in den Formkern eingefahren werden können, woraufhin der Formkern innenseitig an den Stirnwänden gehalten wird. Danach können die Seitenwände hochgeklappt und an den Stirnwänden fixiert werden.

Vorzugsweise ist die Außenform stirnseitig durch Stirnwände verschließbar, wobei die Stirnwände vorzugsweise jeweils Mittel zum Zentrieren des Formkerns aufweisen.

Vorzugsweise ist die Form bzw. die Außenform derart eingerichtet, dass das Betonrohr entsprechend der späteren Einbaulage des Betonrohrs gießbar ist, wobei das Bodenteil vorzugsweise als eine Negativform des Betonrohrfußes auf der Unterseite des Betonrohrs ausgebildet ist.

Bei der liegenden Herstellung von Betonrohren mit Fuß (sog. Fußrohre) in umgekehrter Einbaulage, wie z.B. in Fig. 2 dargestellt und wie aus der WO 2009/112248 A2 bekannt, im Gießverfahren in einer Trogschalung gestaltet es sich äußerst schwierig, den Fuß des Betonrohres präzise auszubilden, da für die präzise Ausformung des Rohrfußes eine ebenmäßige Befüllung mit Beton erforderlich ist. Somit wird es ebenfalls erforderlich, die Form nach dem Abgießen genau waagerecht aufzustellen. Ist die Form nicht genau waagerecht ausgerichtet, kann der Beton so verlaufen, dass eine nachteilig ungleichmäßige Fußform resultiert. Bei der späteren Verlegung des Betonrohres können ungleichmäßig ausgeformte Rohrfüße zu einem Versatz zwischen den Rohren führen, der den Einbau erheblich erschwert.

Diese Nachteile können vorteilhaft dadurch vermieden werden, dass das Abgießen des Fußrohres entsprechend der späteren Einbaulage erfolgt, d.h. mit dem späteren Fuß des Fußrohres nach unten weisend, da ein Bodenteil der Außenform als präzise Negativform des Fußes des Fußrohrs ausgebildet werden kann. Eine exakt waagrechte Ausrichtung der Außenform ist somit nicht erforderlich, da die Ausrichtung der Außenform nicht den Fuß sondern den Scheitel des Rohres beeinflusst, wobei die Scheitelform des Rohres keinen wesentlichen Einfluss auf die Funktionsweise des Betonrohres hat. Am Scheitel des Betonrohres entsteht somit vorteilhaft ein Bereich, der dazu geeignet ist, als Füllausgleich zu dienen, wobei in diesem Bereich eine weit höhere Fülltoleranz ermöglicht wird, da dieser Bereich für den Einbau und die Funktion des Rohres keine bzw. zumindest eine untergeordnete Rolle spielt. Bei einer Außenform mit klappbaren Seitenwänden, in der das Abgießen des Fußrohres entsprechend der späteren Einbaulage erfolgt, ist es somit vorteilhaft möglich, am Scheitel bzw. Kamm des Betonrohres einen derartigen Füllausgleich für den Beton zu schaffen, wodurch ein Toleranzbereich geschaffen werden kann, der es erlaubt, den Aufwand für Gleichmäßigkeit und genaue Dosierung beim Einfüllen des Betons zu reduzieren. Eine Trogform, in der das Betonrohr in umgekehrter Lage gegossen wird, erfordert im Gegensatz dazu eine aufwendigere, genau dosierte und gleichmäßige Füllung.

Somit kann mit einer Außenform mit klappbaren Seitenwänden, in der das Betonrohr entsprechend der späteren Einbaulage gegossen wird, auf einfache Weise vorteilhaft eine präzise Ausformung des Rohrfußes gewährleistet werden. Insbesondere kann mit der Außenform mit klappbaren Seitenwänden, in der das Abgießen des Fußrohres entsprechend der späteren Einbaulage erfolgt, auf einfache Weise mittels einer geeigneten Ausgestaltung des als Negativform des Rohrfußes wirkende Bodenteils eine vorteilhafte Freistellung in der Mitte des Fußes eingebracht werden, welche die Statik und den Einbau verbessert. Es ist insbesondere vorteilhaft möglich, im Fuß des Betonrohres Aussparungen auszuformen (z.B. Freistellung in der Mitte des Fußes für eine optimierte Statik oder auch eine Fase an der Stirnseite des Fußes für einen erleichterten Zusammenbau, da beim Zusammenschieben zweier Rohre weniger Bettungsmaterial aufgeschoben wird bzw. aufgeschobenes Material unter der Fase Platz findet).

Weiterhin ist es bei einer Außenform mit klappbaren Seitenwänden, in der das Betonrohr entsprechend der späteren Einbaulage gegossen wird, nicht mehr nachteilig, wenn abhängig von der Betonrezeptur eine weiche Zone aus Schlämmen und Lufteinschlüssen auf der Eingußoberseite entsteht, da diese im Gegensatz zu einer Trogform, in der das Betonrohr in umgekehrter Lage gegossen wird, nun nicht mehr am Fuß des Rohres entsteht, sondern im Bereich des Füllausgleiches am Scheitel des Rohrs.

Zudem kann bei einer Außenform mit klappbaren Seitenwänden, in der das Betonrohr entsprechend der späteren Einbaulage gegossen wird, das Einbringen von zweiteiligen Bewehrungen vereinfach werden. Soll z.B. eine Matte am Rohrfuß und/oder eine Matte in U-Form über dem Kunststoffinnenrohr eingebracht werden, kann dies in Einbaulage im Gegensatz zur umgekehrten Lage vereinfacht werden, da die Matte in umgedrehter U-Form um das Kunststoffinnenrohr von oben in die Außenform eingebracht werden kann, nachdem das Kunststoffrohr mit Formkern bereits installiert ist.

Vorzugsweise nähern sich die Seitenwände im geschlossenen Zustand der Außenform zur Oberseite der Außenform hin an, derart, dass zwischen den oberen Längskantenabschnitten der Seitenwände ein länglicher Spalt ausgebildet wird, durch den Beton, insbesondere selbstverdichtender Beton, einfüllbar ist.

Vorzugsweise sind die Seitenwände derart ausgebildet, dass sich der Querschnitt der Außenform ausgehend von dem Bodenteil zu einem mittleren Abschnitt der Seitenwände erweitert und von dem mittleren Abschnitt der Seitenwände hin zur Oberseite der Außenform verjüngt. Somit kann der Fuß des Betonrohrs schmaler ausgeführt werden, wodurch Material und somit Kosten eingespart werden können.

Vorzugsweise sind die beiden oberen Längskantenabschnitte der Seitenwände derart ausgebildet, dass in dem Spalt zwischen den beiden oberen Längskantenabschnitten der Seitenwände bei geschlossener Außenform ein als Füllausgleichsbereich für Beton wirkendes Füllvolumen bereitgestellt wird. Ein derartiger Füllausgleichsbereich ermöglicht es vorteilhaft, dass der Aufwand betreffend die Dosierung des Betons reduziert werden kann, da die Einfüllmenge nicht präzise dosiert werden muss. Der Füllausgleichsbereich stellt einen Toleranzbereich bereit, der geringe Abweichungen in der Dosierung des Betons erlaubt. Bei dem Einfüllen des Betons wird Beton in die Außenform eingefüllt bis die Außenform bis zu dem Füllausgleichsbereich gefüllt ist. Wird etwas mehr Beton als das Sollvolumen eingefüllt, wird der überschüssige Beton in dem Füllausgleichsbereich aufgenommen. So entsteht ggf. ein etwas überhöhter Kamm auf der Oberseite des Betonrohres, welcher die Funktion und Qualität des hergestellten Betonrohrs jedoch nicht beeinflusst. Somit muss die Füllmenge an Beton nicht so präzise dosiert werden, wie es z.B. bei der Verwendung von Außenformen erforderlich ist, in denen das Betonrohr in umgekehrter Lage zur Einbaulage gegossen wird.

Vorzugsweise weisen die Stirnwände und/oder die Seitenwände der Außenform Mittel, insbesondere Spannhebelverschlüsse, zum Fixieren der Seitenwände mit den Stirnwänden im geschlossenen Zustand der Außenform auf. Vorzugsweise umfassen hierbei die Seitenwände jeweils an den Enden Mittel, insbesondere Spannhebelverschlüsse, zum Fixieren der Seitenwände mit den Stirnwänden, wobei die Seitenwände im zugeklappten Zustand mittels der Mittel, insbesondere Spannhebelverschlüsse, zum Fixieren der Seitenwände mit den Stirnwänden an den Stirnwänden fixiert werden. Insbesondere können die Seitenwände vorzugsweise im geschlossenen Zustand der Außenform mit Spannmitteln arretiert werden, die in die jeweiligen Stirnwände eingreifen. Somit können die Seitenwände und Stirnwände auf einfache und stabile Weise nach dem Hochklappen der Seitenwände aneinander fixiert werden, bevor der Beton in die Außenform eingefüllt wird.

Die vorstehend genannten Aspekte und Merkmale der vorliegenden Erfindung können im Umfang der unabhängigen Ansprüche teilweise und vollständig kombiniert werden. Weitere Aspekte, Merkmale und Vorteile der vorliegenden Erfindung können der folgenden ausführlichen Beschreibung bevorzugter Ausführungsbeispiele und der ausführlichen Figurenbeschreibung entnommen werden.

### Kurzbeschreibung der Figuren

Fig. 1 zeigt schematisch eine Perspektivansicht eines einen Grundkörper aus Beton und ein Kunststoffinnenrohr umfassenden Betonrohrs zum Leiten einer Flüssigkeit.
Fig. 2 zeigt schematisch eine Draufsicht eines Betonrohrs in einer Außenform gemäß einem Verfahren zum Herstellen des Betonrohrs nach dem Stand der Technik.
Fig. 3 zeigt schematisch einen Längsschnitt durch ein einen Grundkörper aus Beton und ein Kunststoffinnenrohr umfassendes Betonrohr, in dem ein einteiliger Formkern gemäß einem Verfahren zum Herstellen des Betonrohrs nach dem Stand der Technik eingebracht ist.
Fig. 4 zeigt schematisch einen Längsschnitt durch ein einen Grundkörper aus Beton und ein Kunststoffinnenrohr umfassendes Betonrohr, in dem ein zweiteiliger Formkern gemäß einem ersten Ausführungsbeispiel des Herstellungsverfahrens nach der vorliegenden Erfindung eingebracht ist.
Fig. 5 zeigt schematisch einen Längsschnitt durch ein einen Grundkörper aus Beton und ein Kunststoffinnenrohr umfassendes Betonrohr, in dem ein dreiteiliger Formkern gemäß einem zweiten Ausführungsbeispiel des Herstellungsverfahrens nach der vorliegenden Erfindung eingebracht ist.
Fig. 6A und Fig. 6B zeigen schematisch jeweils Beispiele für einen Querschnitt durch ein in einer Trogschalung liegend hergestelltes Betonrohr nach einem Ausführungsbeispiel des Herstellungsverfahrens nach der vorliegenden Erfindung.
Fig. 7A und Fig. 7B zeigen schematisch jeweils Beispiele für einen Querschnitt durch ein in einer stehenden Außenform stehend hergestelltes oder in einer mehrteiligen Trogschalung liegend hergestelltes Betonrohr nach Ausführungsbeispielen des Herstellungsverfahrens nach der vorliegenden Erfindung.
Fig. 8A und Fig. 8B zeigen schematisch jeweils Beispiele für einen Querschnitt durch ein in einer stehenden Außenform stehend hergestelltes Betonrohr nach einem Ausführungsbeispiel des Herstellungsverfahrens nach der vorliegenden Erfindung.
Fig. 9A bis Fig. 9C zeigen schematisch einen Ablauf des Aufweitens eines Kunststoffinnenrohrs zum Ausbilden einer Aufweitung mittels eines Formkernteils des mehrteiligen Formkerns gemäß einem bevorzugten Ausführungsbeispiel des Herstellungsverfahrens nach der vorliegenden Erfindung.
Fig. 10 zeigt schematisch einen Ausschnitt eines Längsschnitts eines Endes des Kunststoffinnenrohrs gemäß einem Ausführungsbeispiel der vorliegenden Erfindung.
Fig. 11A zeigt schematisch eine Perspektivansicht einer pilzförmigen Noppe auf der Außenseite des Kunststoffinnenrohrs gemäß einem Ausführungsbeispiel der vorliegenden Erfindung und Fig. 11B zeigt schematisch einen Querschnitt der pilzförmigen Noppe.
Fig. 12A bis Fig. 12D zeigen schematisch eine Draufsicht, eine Perspektivansicht, eine Vorderansicht und eine Seitenansicht einer y-förmigen Noppe auf der Außenseite des Kunststoffinnenrohrs mit zwei Querstegen gemäß einem Ausführungsbeispiel der vorliegenden Erfindung. Fig. 12E und Fig. 12F zeigen schematisch Querschnitte der y-förmigen Noppe mit zwei Querstegen.
Fig. 13A bis Fig. 13D zeigen schematisch eine Draufsicht, eine Perspektivansicht, eine Vorderansicht und eine Seitenansicht einer v-förmigen Noppe auf der Außenseite des Kunststoffinnenrohrs mit einem Quersteg gemäß einem Ausführungsbeispiel der vorliegenden Erfindung. Fig. 13E und Fig. 13F zeigen schematisch Querschnitte der v-förmigen Noppe mit einem Quersteg.
Fig. 14A zeigt schematisch eine Draufsicht eines Kunststoffinnenrohrs, das zwischen zwei Halbschalen gehalten ist. Fig. 14B zeigt schematisch einen Schnitt durch das in der unteren Halbschale gehaltene Kunststoffinnenrohr.
Fig. 15 zeigt schematisch einen Ausschnitt eines Längsschnitts durch den Endbereich zweier zusammengesetzter Betonrohre nach der vorliegenden Erfindung zwischen die eine Doppelmuffe eingebracht ist.
Fig. 16 zeigt eine beispielhafte schematische Perspektivansicht einer Außenform gemäß einem Ausführungsbeispiel der vorliegenden Erfindung.
Fig. 17A zeigt eine beispielhafte schematische Seitenansicht der Außenform aus Fig. 16 und Fig. 17B zeigt eine beispielhafte schematische Draufsicht der Außenform aus Fig. 16.
Fig. 18A zeigt eine Schnittansicht entlang der Schnittebene A - A aus Fig. 17B und Fig. 18B zeigt eine Detailansicht des Ausschnitts G aus Fig. 18A.
Fig. 19 zeigt eine beispielhafte schematische Vorderansicht der Außenform aus Fig. 16.
Fig. 20A zeigt eine Schnittansicht entlang der Schnittebene B - B aus Fig. 18A, Fig. 20B zeigt eine Schnittansicht entlang der Schnittebene C - C aus Fig. 19, Fig. 20C zeigt eine Schnittansicht entlang der Schnittebene D - D aus Fig. 17A, Fig. 20D zeigt eine Schnittansicht entlang der Schnittebene E - E aus Fig. 17A, Fig. 20E zeigt eine Schnittansicht entlang der Schnittebene F - F aus Fig. 17A und Fig. 20F zeigt eine Schnittansicht entlang der Schnittebene H - H aus Fig. 18A.

### Ausführliche Beschreibung bevorzugter Ausführungsbeispiele der Erfindung unter Bezugnahme auf die Figuren

Gegenstand der vorliegenden Erfindung ist ein Verfahren zum Herstellen eines Betonrohrs 1 zum Leiten einer Flüssigkeit wie es beispielhaft in Fig. 1 dargestellt ist. Das Betonrohr 1 umfasst einen Grundkörper 2 aus Beton und ein Kunststoffinnenrohr 3 zum Schutz des Betongrundkörpers 2 vor korrosiven Einwirkungen durch die zu leitende Flüssigkeit, so z.B. säurehaltiges Abwasser. Speziell schützen derartige Kunststoffinnenrohre weiterhin oberhalb des Fließbereichs des Abwassers vor sich im Abwasser bildenden ätzenden Gasen, sich niederschlagenden Säuren (z.B. biogene Schwefelsäuren) und an den Innenwänden siedelnden Bakterien, die sonst die innere Oberfläche des Betons oberhalb des Abwassers angreifen könnten. Gleiche oder ähnliche, strukturelle bzw. funktionale Merkmale oder Gegenstände in unterschiedlichen Figuren tragen gleiche Bezugszeichen.

Das Betonrohr 1 wird in einem Betongießverfahren hergestellt, wobei ein Formkern 4 in das Kunststoffinnenrohr 3 eingebracht wird, das Kunststoffinnenrohr 3 insbesondere ggf. mit eingebrachtem Formkern 4 in eine ggf. mehrteilig zusammengesetzte Außenform 5 eingebracht wird, die an die gewünschte Außenform des Betonrohrs 1 angepasst ist. Das Betonrohr 1 in Fig. 1 weist beispielhaft eine gerade Unterseite 9a und seitliche Seiten 9b und 9c auf, die sich bogenförmig auf einen Kamm 10 des Betonrohrs 1 hin erstrecken. Die gerade Unterseite 9a des Betonrohrs 1 ist besonders vorteilhaft, da das Betonrohr 1 bei dem Verlegen mit der Unterseite 9a eine gerade Auflagefläche bietet, die ein Ausrichten und Zentrieren beim Zusammensetzen mehrerer Betonrohre 1 zu einem Betonrohrleitungssystem erleichtern. Gemäß einer besonders vorteilhaften Ausführungsform der vorliegenden Erfindung wird das Betonrohr 1 liegend gefertigt, wobei die Außenform 5 durch eine Trogschalung gebildet wird. Das Betonrohr 1 kann jedoch auch stehend in einer stehenden Außenform hergestellt werden. Das Kunststoffinnenrohr 3 kann z.B. aus einer dünnen Kunststofffolie gebildet sein, die zu dem Kunststoffinnenrohr 3 geschweißt ist.

Das Kunststoffinnenrohr 3 kann z.B. in eine ein- oder mehrteilige Außenform oder auch in eine noch zusammenzusetzende mehrteilige Außenform bzw. teilweise zusammengesetzte mehrteilige Außenform eingebracht werden. So ist es z.B. möglich, eine Trogschalung mit separaten Endplatten zu verwenden, wobei die Endplatten zum endseitigen Verschließen an die Trogschalung vor Einfüllen von Beton angebracht werden, z.B. durch Verschließen der Trogschalung mittels der Endplatten nach Einbringen des Kunststoffinnenrohrs 3. Bei der Verwendung einer mehrteiligen Außenform 5 kann der Schritt des Einbringens des Kunststoffinnenrohrs 3 in die Außenform insbesondere auch durchgeführt werden, indem nicht direkt das Kunststoffinnenrohr 3 in die mehrteilige Außenform eingebracht wird, sondern die Außenform um das Kunststoffinnenrohr 3 zusammengesetzt wird. Bei Verwendung einer Trogschalung kann die Trogschalung im Schritt Einbringen des Kunststoffinnenrohrs 3 in eine Außenform 5 stirnseitig durch Stirnwände verschlossen werden, wobei die Stirnwände jeweils vorteilhaft Mittel zum Zentrieren des Formkerns aufweisen können.

Bei der Herstellung des Betonrohrs 1 wird nach Einbringen des Kunststoffinnenrohrs 3 in einen Zwischenraum zwischen der Außenform 5 und dem Kunststoffinnenrohr 3 zum Formen des Grundkörpers 2 Beton eingefüllt. Hierfür wird gemäß einem bevorzugten Ausführungsbeispiel der vorliegenden Erfindung fließfähiger, selbstverdichtender Beton verwendet. Es kann auch nichtselbstverdichtender Beton verwendet werden, wobei das Verdichten des Betons dann durch Rüttelvorgänge bewirkt wird. Das Kunststoffinnenrohr 3 verbleibt nach dem Verfestigen des Betons als Innenschalung in dem Grundkörper 2 aus Beton und der Formkern 4 wird nach zumindest teilweisem Verfestigen des Betons wieder entnommen und kann somit ggf. wiederverwendet werden.

Erfindungsgemäß wird bei dem Verfahren zur Herstellung eines Betonrohrs 1 ein mehrteiliger Formkern 4 verwendet. Fig. 4 zeigt schematisch einen Längsschnitt durch ein Betonrohr 1, in dem ein zweiteiliger Formkern 4 gemäß einem ersten bevorzugten Ausführungsbeispiel des Herstellungsverfahrens nach der vorliegenden Erfindung eingebracht ist. Hierbei umfasst der Formkern 4 ein erstes Formkernteil 4a und ein zweites Formkernteil 4b. Fig. 5 zeigt schematisch einen Längsschnitt durch ein einen Grundkörper aus Beton und ein Kunststoffinnenrohr umfassendes Betonrohr, in dem ein dreiteiliger Formkern 4 gemäß einem zweiten bevorzugten Ausführungsbeispiel des Herstellungsverfahrens nach der vorliegenden Erfindung eingebracht ist. Hierbei umfasst der Formkern 4 neben einem äußeren, ersten Formkernteil 4a und einem äußeren, zweiten Formkernteil 4b noch ein mittleres bzw. inneres, drittes Formkernteil. Die vorliegende Erfindung ist jedoch nicht auf Ausführungsbeispiele mit zweiteiligen oder dreiteiligen Formkernen begrenzt und es können mehrteilige Formkernteile verwendet werden, z.B. indem die in den Figuren 4 und 5 dargestellten Formkernteile 4a, 4b und 4c noch weiter unterteilt werden.

In den Figuren 4 und 5 ist dargestellt, dass das Kunststoffinnenrohr 3 einen Innenabschnitt 3c und an beiden Enden jeweils Aufweitungsabschnitte 3a und 3b umfasst, wobei die außenseitigen Aufweitungsabschnitte 3a und 3b erfindungsgemäß einen größeren Querschnitt aufweisen als der Innenabschnitt 3c. Gemäß einem bevorzugten Ausführungsbeispiel sind die Querschnitte der Aufweitungsabschnitte 3a und 3b sowie der Querschnitt des Innenabschnitts 3c jeweils im Wesentlichen kreisförmig und die Aufweitungsabschnitte 3a und 3b sind im Verhältnis zu dem Querschnitt des Innenabschnitts 3c des Kunststoffinnenrohrs radial erweitert. Die Aufweitungsabschnitte 3a und 3b dienen hierbei dazu, bei dem stoßseitigen Zusammensetzen zweier Betonrohre 1 Zwischenmuffen bzw. Innenrohrstutzen aufzunehmen.

In den Figuren 4 und 5 ist weiterhin dargestellt, dass der Formkern 4 derart an die Form des Kunststoffinnenrohrs 3 angepasst ist, dass ein Innenabschnitt des Formkerns 4 im Wesentlichen einen Querschnitt entsprechend dem Querschnitt des Innenabschnitts 3c des Kunststoffinnenrohrs 3 aufweist und die Außenabschnitte des Formkerns 4 im Wesentlichen einen Querschnitt entsprechend dem Querschnitt der Aufweitungsabschnitte 3a und 3b an den Enden des Kunststoffinnenrohrs 3 aufweisen.

In dem ersten Ausführungsbeispiel gemäß Fig. 4 ist der Formkern 4 zweiteilig ausgebildet und jedes der beiden äußeren Formkernteile 4a und 4b des zweiteiligen Formkerns 4 umfasst jeweils einen Außenabschnitt, der einen Querschnitt im Wesentlichen entsprechend den jeweiligen Aufweitungsabschnitten 3a oder 3b des Kunststoffinnenrohrs 3 aufweist. Weiterhin weist jedes der Formteile 4a und 4b einen inneren Abschnitt entsprechend des Innenabschnitts des Formkerns 4 auf, der einen Querschnitt im Wesentlichen entsprechend dem Querschnitt des Innenabschnitts 3c des Kunststoffinnenrohrs aufweist. Somit ist der aus den beiden Formkernteilen 4a und 4b zusammengesetzte Formkern 4 entlang seiner gesamten Länge im Wesentlichen an den Querschnitt des Kunststoffinnenrohrs 3 angepasst, einschließlich der endseitig radial aufgeweiteten Aufweitungsbereiche 3a und 3b des Kunststoffinnenrohrs 3. Insbesondere ist der Innenabschnitt des Formkerns 4 in Fig. 4 im Wesentlichen als Abschnitt des zweiten äußeren Formkernteils 4b ausgebildet, d.h. das zweite Formkernteil 4b ist länger ausgebildet als das erste Formkernteil 4a. Dies hat den Vorteil, dass die Stoßfläche der beiden Formkernteile 4a und 4b in Fig. 4 nicht in der Mitte des Formkerns 4 auftritt. Somit kann das zweite Formkernteil 4b die Auftriebskräfte, die durch den in die Außenform eingefüllten Beton entstehen und besonders stark in der Mitte des Kunststoffinnenrohres auftreten, besonders gut abfangen und das Kunststoffinnenrohr 3 formstabil unterstützen, so dass selbst bei sehr dünner Kunststoffinnenrohrwandung keine Verformung des Querschnitts des Innenabschnitts 3c des Kunststoffinnenrohrs 3 auftritt.

In dem zweiten Ausführungsbeispiel gemäß Fig. 5 ist der Formkern 4 dreiteilig ausgebildet und jedes der beiden äußeren Formkernteile 4a und 4b des dreiteiligen Formkerns 4 umfasst jeweils einen Außenabschnitt, der einen Querschnitt im Wesentlichen entsprechend den jeweiligen Aufweitungsabschnitten 3a oder 3b des Kunststoffinnenrohrs 3 aufweist. Weiterhin weist jedes der äußeren Formteile 4a und 4b einen kurzen inneren Abschnitt entsprechend des Innenabschnitts des Formkerns 4 auf, der einen Querschnitt im Wesentlichen entsprechend dem Querschnitt des Innenabschnitts 3c des Kunststoffinnenrohrs aufweist. Das mittlere dritte Formkernteil 4c weist entlang seiner gesamten Länge im Wesentlichen einen Querschnitt entsprechend dem Querschnitt des Innenabschnitts 3c des Kunststoffinnenrohrs 3 auf. Somit ist der aus den drei Formkernteilen 4a, 4b und 4c zusammengesetzte Formkern 4 entlang seiner gesamten Länge im Wesentlichen an den Querschnitt des Kunststoffinnenrohrs 3 angepasst, einschließlich der endseitig radial aufgeweiteten Aufweitungsbereiche 3a und 3b des Kunststoffinnenrohrs 3.

Das mittlere dritte Formkernteil 4c bildet in Fig. 5 im Wesentlichen den gesamten Innenabschnitt des Formkerns 4. Dies hat den Vorteil, dass das mittlere Formkernteil 4c die Auftriebskräfte, die durch den in die Außenform eingefüllten Beton entstehen und besonders stark in der Mitte des Kunststoffinnenrohres auftreten, besonders gut abfangen kann und das Kunststoffinnenrohr 3 formstabil unterstützen kann, so dass selbst bei sehr dünner Kunststoffinnenrohrwandung keine Verformung des Querschnitts des Innenabschnitts 3c des Kunststoffinnenrohrs 3 auftritt.

Um das Einbringen des dritten Formkernteils 4c in das Kunststoffinnenrohr 3 aber auch das Entschalen, d.h. das Entfernen des Formkerns aus dem zumindest teilweise verfestigten Betonrohr, zu erleichtern, kann das dritte Formkernteil 4c eine leicht verjüngende Form zu einem Ende hin aufweisen, z.B. indem es im Wesentlichen konisch ausgebildet ist oder zumindest einen konisch ausgebildeten Abschnitt umfasst. Dies gilt in gleicher Weise für den inneren Abschnitt des Formkernteils 4b in Fig. 4. Außerdem kann weiterhin ein sich verjüngendes, z.B. konisch oder kegelförmig zulaufendes Einführhilfsformteil an das mittlere Formkernteil 4c in Fig. 5 bzw. an das Formkernteil 4b in Fig. 4 angebracht werden, um das Einführen in das Kunststoffinnenrohr 3 zu erleichtern. Das Einführhilfsformteil kann nach Einführen des jeweiligen Formkernteils wieder entfernt werden, ggf. bevor weitere Formkernteile des Formkerns eingebracht werden. Ein derartiges Einführhilfsformteil kann somit als "Einfädelhilfe" verwendet werden.

In den beiden Ausführungsbeispielen nach Fig. 4 und Fig. 5 weisen die inneren Abschnitte der äußeren Formkernteile 4a und 4b jeweils einen Querschnitt im Wesentlichen entsprechend dem Querschnitt 3c des Kunststoffinnenrohrs 3 auf und sind somit gemäß der vorstehenden Begriffsbildung dem Innenabschnitt des Formkerns zuzurechnen. Der Innenabschnitt des Formkerns 4 bildet sich somit in diesem Fall aus Abschnitten unterschiedlicher Formkernteile. Beispielhaft gehen die dem Innenabschnitt zugehörigen Abschnitte der äußeren Formkernteile 4a und 4b in den Figuren 4 und 5 jeweils in einem an den Innenabschnitt anschließenden weiteren Abschnitt der äußeren Formkernteile 4a und 4b kontinuierlich, insbesondere konisch, in den jeweiligen Außenabschnitt der äußeren Formkernteile 4a und 4b über.

Beispielhaft sind in den Figuren 4 und 5 die Formkernteile 4a und 4b bzw. 4a, 4b und 4c jeweils als Vollkörper dargestellt. Die vorliegende Erfindung ist jedoch nicht auf die Verwendung von mehrteiligen Formkernen mit Vollkörper-Formkernteilen beschränkt. Vielmehr können die Formkernteile als stabile Hohlkörper ausgebildet sein. Des Weiteren können die Formkernteile aus verschiedenen Teilen zusammengesetzt sein oder einteilig ausgebildet sein.

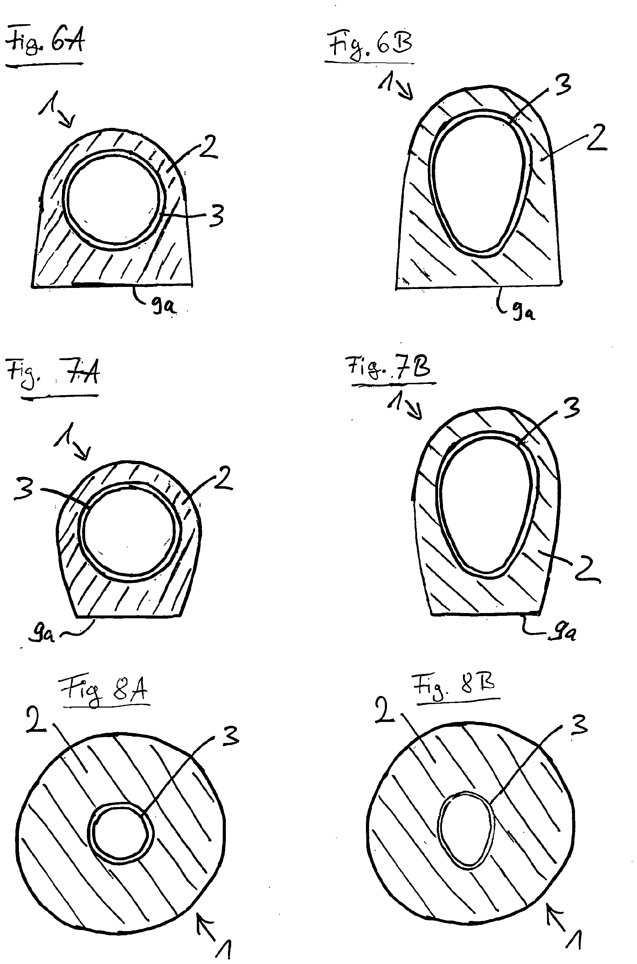

Fig. 6A und Fig. 6B zeigen schematisch jeweils Querschnitte durch in einer Trogschalung liegend hergestellte Betonrohre 1, die eine im Wesentlichen gerade Unterseite 9a ähnlich zu dem Betonrohr 1 aus Fig. 1 aufweisen, nach einem Ausführungsbeispiel des Herstellungsverfahrens nach der vorliegenden Erfindung. Hierbei ist der innere Rohrquerschnitt (d.h. der Querschnitt des Kunststoffinnenrohrs 3) in Fig. 6A beispielhaft kreisförmig und in Fig. 6B beispielhaft eiförmig. Die vorliegende Erfindung ist nicht auf diese Innenrohrquerschnitte beschränkt und jede bekannte Innenrohrquerschnittsform kann erfindungsgemäß gefertigt werden. Ein eiförmiger Innenrohrquerschnitt ist besonders für Abwasserrohre in trockenen Ländern vorteilhaft, da bei gewöhnlichen Wetterbedingungen nur sehr wenig Abwasser geführt wird. In einem eiförmigen Innenrohrquerschnitt verjüngt sich der Querschnitt nach unten hin, so dass trotz geringer Abwassermenge (geringe Wasserführung) eine ausreichende Fließgeschwindigkeit bzw. ein ausreichender Pegel erreicht werden kann, um dennoch Schmutzfracht fortzubewegen. Bei hoher Wasserführung z.B. bei Starkregen kann weiterhin bedingt durch den eiförmigen Querschnitt eine hohe Wassermenge bewältigt werden.

Fig. 7A und Fig. 7B zeigen schematisch jeweils Querschnitte durch in einer Trogschalung liegend hergestellte Betonrohre 1, die eine im Wesentlichen gerade Unterseite 9a ähnlich zu dem Betonrohr 1 aus Fig. 1 aufweisen, nach einem Ausführungsbeispiel des Herstellungsverfahrens nach der vorliegenden Erfindung. Hierbei ist der innere Rohrquerschnitt (d.h. der Querschnitt des Kunststoffinnenrohrs 3) in Fig. 7A beispielhaft kreisförmig und in Fig. 7B beispielhaft eiförmig. Da gemäß Fig. 7A und 7B die Seitenwände 9a und 9b der Betonrohre 1 sich zur Unterseite 9a hin verjüngen, wobei die Unterseite 9a bei dem Gießvorgang in der Trogschalung oben liegt (vgl. mit dem Beispiel aus Fig. 2), muss hierbei jedoch eine Trogschalung verwendet werden, bei der zum Entschalen nach zumindest teilweisem Verfestigen des Betons Seitenwände der Trogschalung entfernt werden können, um das Betonrohr 1 aus der Trogschalung herausnehmen zu können.

Wie vorstehend beschrieben kann ein Betonrohr nach einem weiteren Ausführungsbeispiel der vorliegenden Erfindung auch stehend in einer stehenden Außenform hergestellt werden. Zum Beispiel können Betonrohre 1 mit Querschnitten gemäß Fig. 6A bis 7B auch in einer stehenden Außenform stehend gefertigt werden. Die Herstellung in einem derartigen stehenden Verfahren ist z.B. insbesondere dann vorteilhaft, wenn vor Einfüllen des Betons zusätzlich zwischen Außenform und Kunststoffinnenrohr eine Bewehrung eingebracht wird, um den späteren Grundkörper 2 von Innen z.B. durch ein Gerüst zu stabilisieren. Die stehende Fertigung eignet sich insbesondere auch zur Herstellung von Vortriebsrohren, die einen im Wesentlichen kreisförmigen Außenquerschnitt des Grundkörpers 2 aufweisen müssen, um in kreisförmige Bohrungen im Erdbereich durch Vortrieb eingebracht werden zu können. Fig. 8A und Fig. 8B zeigen schematisch jeweils Querschnitte durch in einer stehenden Außenform stehend hergestellte Betonrohre 1 mit im Wesentlichen kreisförmigen Außenquerschnitt des Grundkörpers 2, insbesondere Vortriebsrohre, nach einem Ausführungsbeispiel des Herstellungsverfahrens nach der vorliegenden Erfindung. Da es sich bei den in den Fig. 8B und 8B dargestellten Betonrohren 1 beispielhaft Vortriebsrohre handelt, ist der Querschnitt des Grundkörpers 2 aus Beton im Verhältnis zu dem Querschnitt des jeweiligen Kunststoffinnenrohrs 3 größer, um die bei dem Verlegen der Rohre durch Vortrieb auftretenden hohen Belastungen zu verteilen. Der innere Rohrquerschnitt (d.h. der Querschnitt des Kunststoffinnenrohrs 3) ist in Fig. 8A beispielhaft kreisförmig und in Fig. 8B beispielhaft eiförmig.

Im vorstehend beschriebenen, stehenden Herstellungsverfahren wird ein Betonrohr 1 vorzugsweise in Überlänge hergestellt, und das Verfahren umfasst vorzugsweise einen weiteren Schritt des Ablängens des Betonrohrs 1 auf eine gewünschte Länge durch Abtrennen eines oberen Überstandabschnitts des Betonrohrs 1. So wird ein Überstandsabschnitt des Betonrohrs 1 bzw. ein Überstandsabschnitt des Grundkörpers 2 aus Beton abgetrennt, in dem sich im Beton aufgestiegene Gas- bzw. Luftbläschen gesammelt haben.

Gemäß einem besonders bevorzugten Ausführungsbeispiel des Herstellungsverfahrens nach der vorliegenden Erfindung werden die Aufweitungsabschnitte 3a und 3b an den Enden des Kunststoffinnenrohrs 3 direkt bei dem Schritt des Einbringens des Formkerns 4 in das Kunststoffinnenrohr 3 mittels Einführen eines oder mehrerer äußerer Formkernteile des Formkerns 4 thermoplastisch ausgebildet bzw. ausgeformt, so z.B. durch Einführen der äußeren Formkernteile 4a und 4c der Figuren 4 oder 5. Hierzu kann das Kunststoffinnenrohr 3 vor dem Einbringen des Formkerns 4 in das Kunststoffinnenrohr 3 einen im Wesentlichen konstanten Querschnitt aufweisen, so dass vor Einbringen des Formkerns 4 noch keine Aufweitungsabschnitte 3a und 3b mit radial erweitertem Querschnitt in dem Kunststoffinnenrohr 3 ausgebildet sind. Im Schritt des Einbringens des Formkerns 4 in das Kunststoffinnenrohr 3 können die Aufweitungsabschnitte 3a und 3b an den Enden des Kunststoffinnenrohrs 3 dann bei dem Einführen der äußeren Formkernteile 4a und 4b des Formkerns 4 ausgebildet werden.

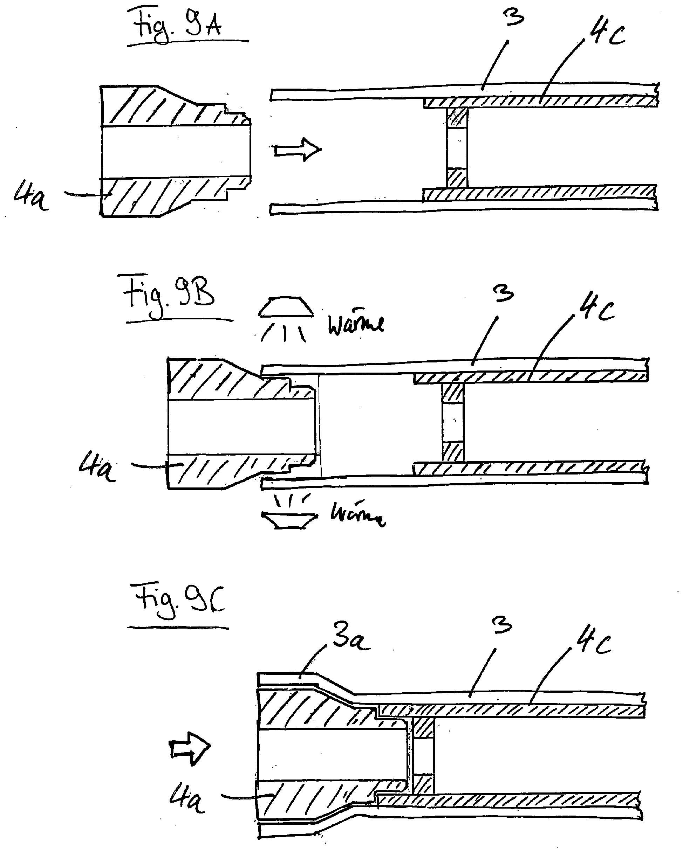

Wie in den Figuren 9A bis 9C beispielhaft für das zweite Ausführungsbeispiel mit dreiteiligem Kern gemäß Fig. 5 schematisch dargestellt ist, umfasst der Schritt des Einbringens des Formkerns 4 in das Kunststoffinnenrohr 3 gemäß einem besonders bevorzugten Ausführungsbeispiel des Herstellungsverfahrens nach der vorliegenden Erfindung einen Schritt des Einführens des inneren Abschnitts des äußeren Formkernteils 4a in das Kunststoffinnenrohr 3 an dem einen Ende des Kunststoffinnenrohrs 3, ggf. bei Verwendung eines zumindest dreiteiligem Formkerns nachdem das mittlere dritte Formkernteil 4c in das Kunststoffinnenrohr eingebracht wurde (siehe Figuren 9A bis 9B). Vor dem weiteren Einführen der Abschnitte des Formkernteils 4a mit radial erweitertem Querschnitt wird dann zumindest das Ende des Kunststoffinnenrohrs 3, in das der innere Abschnitt des Formkernteils 4a eingebracht ist, erhitzt, um in diesem Bereich thermoplastisch verformbar gemacht zu werden. Hierbei ist das Material des Kunststoffinnenrohrs 3 ein thermoplastischer Kunststoff. Der bereits eingebrachte innere Abschnitt des Formkernteils 4a verhindert hierbei vorteilhaft, dass das erhitzte Ende des Kunststoffinnenrohrs 3 in sich zusammenfällt bzw. sich zusammenzieht. Wie in Fig. 9B dargestellt, erfolgt das Erhitzen des Kunststoffinnenrohrs 3 an dem Ende bevorzugt außenseitig durch Bestrahlung mit Wärme und/oder ggf. durch außenseitige Zufuhr von Heißluft. Es ist jedoch auch möglich, das Erhitzen durch innenseitige Bestrahlung mit Wärme und/oder innenseitige Zufuhr von Heißluft durchzuführen oder ein Formkernteil 4a bereitzustellen, dass ein Heizmittel umfasst, mit dem das Ende des Kunststoffinnenrohrs 3 innenseitig erhitzt werden kann.

Nachdem das Ende des Kunststoffinnenrohrs 3 durch Erhitzen thermoplastisch verformbar gemacht ist, wird das äußere Formkernteil 4a weiter in das Kunststoffinnenrohr 3 eingeführt und weitet dabei das Ende des Kunststoffinnenrohrs 3 radial auf. Der Aufweitungsabschnitt 3a wird hierbei direkt durch Einführen des äußeren Formkernteils 4a ausgeformt, wie in Fig. 9C dargestellt ist. Der Aufweitungsabschnitt 3a muss somit nicht aufwendig vorgefertigt werden, sondern kann besonders effizient und exakt direkt mit dem Schritt des Einführens des Formkerns 4 für den Betongießvorgang kombiniert werden. Außerdem ist die Form des Aufweitungsabschnitts 3a in einem derartigen Verfahren besonders exakt an die Form des oder der äußeren Formkernteile angepasst bzw. sind das oder die äußeren Formkernteile besonders exakt an die Form des Aufweitungsabschnitts 3a angepasst. Somit ergibt sich eine besonders gute Abdichtungswirkung während des Betongießvorgangs und es ist nicht erforderlich weitere Dichtungsmittel an den Endbereichen des Kunststoffinnenrohrs 3 zu verwenden.

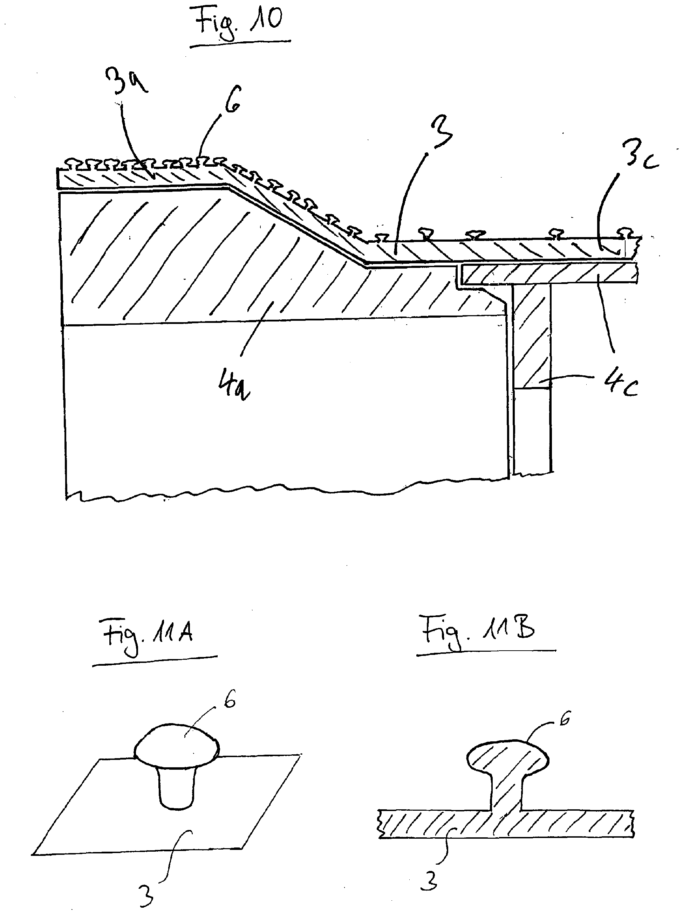

Gemäß einem weiteren Ausführungsbeispiel der Erfindung weist das Kunststoffinnenrohr 3, wie schematisch in Fig. 10 dargestellt ist, außenseitig eine Vielzahl von Noppen 6 zum Verankern des Kunststoffinnenrohrs 3 nach dem zumindest teilweisen Verfestigen des Betons und insbesondere vor Entnahme des Formkerns 4 in dem Grundkörper 2 aus Beton auf. Bei dem Betongießvorgang werden die Noppen 6 von Beton umschlossen und sodann durch Verfestigen des Betons fest am bzw. im Grundkörper 2 verankert. Durch die Verankerung der Noppen 6 in dem Grundkörper 2 aus Beton wird das Kunststoffinnenrohr 3 im Inneren des Betonrohrs 1 formstabil gehalten. Prinzipiell ist die Verankerung eines Kunststoffinnenrohrs 3 mittels Noppen 6 dem Stand der Technik bekannt (siehe z.B. Seite 1 der WO 2009/112248 A2).

Jedoch wird nach dem bevorzugten Ausführungsbeispiel gemäß Fig. 10 ein Kunststoffinnenrohr 3 verwendet, das im Bereich der Enden, insbesondere im Bereich der Aufweitungsabschnitte 3a und 3b, eine größere Noppendichte aufweist als im Bereich des Innenabschnitts 3c. Der Begriff Noppendichte meint hierbei nicht die Materialdichte der einzelnen Noppen 6 sondern die Anzahl der Noppen pro Flächeneinheit auf der Außenseite des Kunststoffinnenrohrs 3 beziehungsweise auf einer Seite einer Kunststofffolie, aus der später das Kunststoffinnenrohr 3 nach Zuschnitt durch Schweißen ausgebildet wird.

Gerade im Bereich der Aufweitungsabschnitte des Kunststoffinnenrohrs 3 wirkt ggf. aufgrund der Ausformung der Aufweitungsabschnitte 3a beziehungsweise 3b mittels der äußeren Formkernteile eine Rückbildungskraft auf die Noppen 6, insbesondere, wenn die Aufweitungsabschnitte 3a nicht durch thermoplastische Verformung, sondern rein mechanisch ausgebildet sind. Diese kann durch eine erhöhte Noppendichte im Bereich der Aufweitungsabschnitte besser ausgeglichen werden. Bei thermoplastischer Ausformung der Aufweitungsabschnitte 3a und 3b des Kunststoffinnenrohrs 3 bietet eine erhöhte Noppendichte im Bereich der Aufweitungsabschnitte 3a und 3b den weiteren Vorteil, dass der Querschnitt des Kunststoffinnenrohrs 3 gerade in dem Bereich der Öffnungen des Kunststoffinnenrohrs 3 nach Entnahme der Formkernteile des Formkerns 4 besonders exakt beibehalten wird, so dass formangepasst Zwischenmuffen beziehungsweise Innenrohrstutzen selbst nach längerer Lagerung der Betonrohre 1 bei dem Zusammensetzen zweier Betonrohre passgenau eingesetzt werden können. Durch die Verringerung der außenseitigen Noppendichte im Bereich des Innenabschnitts 3c des Kunststoffinnenrohrs 3 kann vorteilhaft Material eingespart werden.

Gemäß einer Ausführungsform sind die Noppen 6 auf der Außenseite des Kunststoffinnenrohrs 3 pilzförmig ausgebildet, um eine vorteilhaft feste Verankerung in dem Grundkörper 2 zu ermöglichen. Fig. 11A zeigt schematisch eine Perspektivansicht einer pilzförmigen Noppe 6 auf der Außenseite des Kunststoffinnenrohrs 3 und Fig. 11B zeigt schematisch einen Querschnitt einer solchen pilzförmigen Noppe 6.

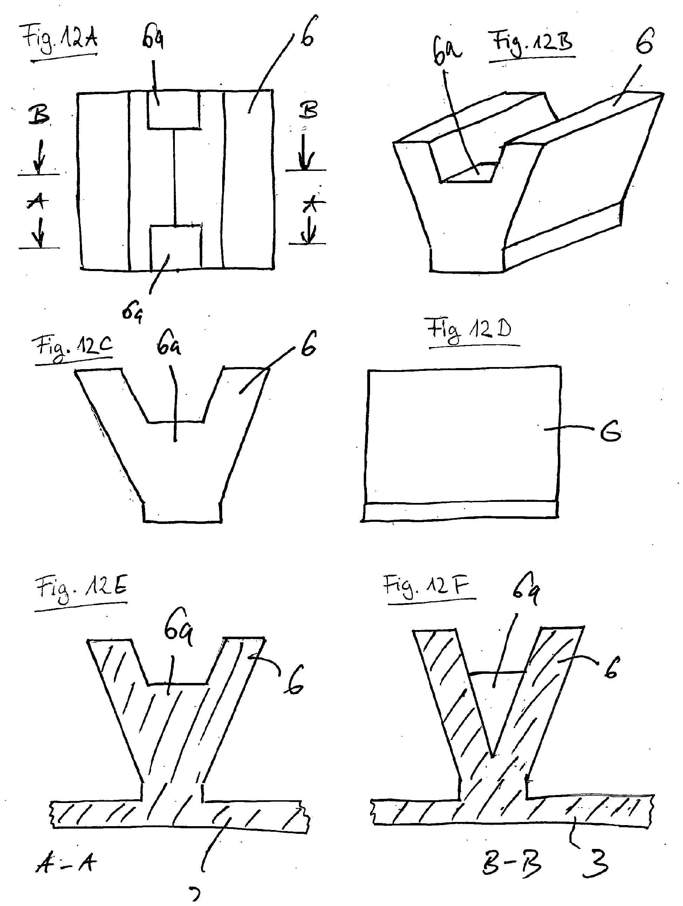

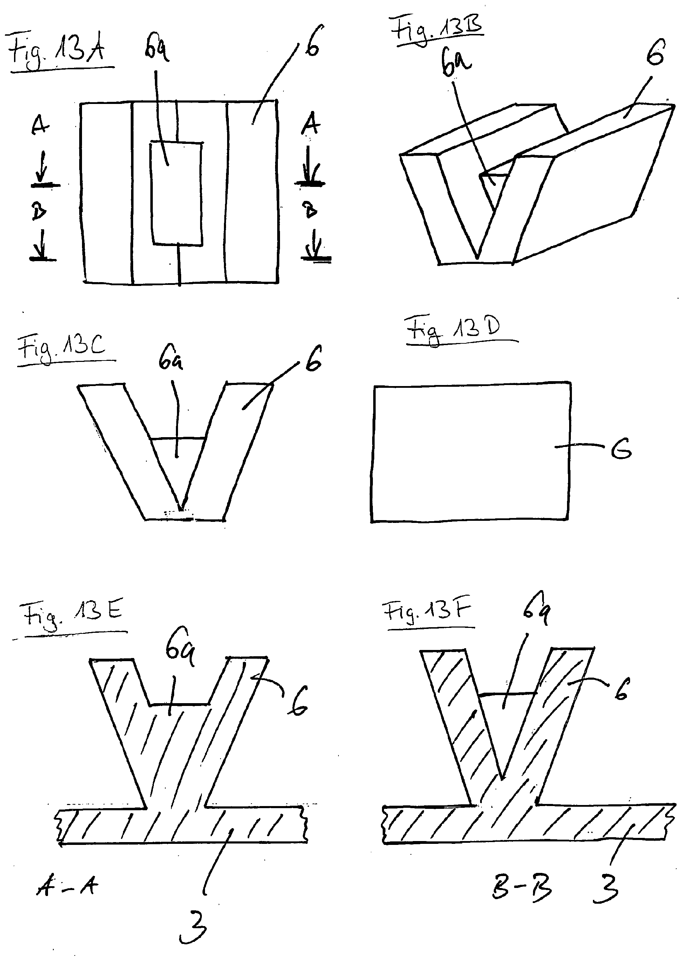

Gemäß einer weiteren Ausführungsform sind die Noppen 6 auf der Außenseite des Kunststoffinnenrohrs 3 im Wesentlichen v- beziehungsweise y-förmig ausgebildet und haben einen oder mehrere Querstege 6a zur Stabilisierung der Außenwände der v- beziehungsweise y-förmigen Noppen 6. Die Figuren 12A bis 12D zeigen beispielhaft schematisch eine Draufsicht, eine Perspektivansicht, eine Vorderansicht und eine Seitenansicht einer y-förmigen Noppe 6 auf der Außenseite des Kunststoffinnenrohrs 3 (beispielhaft mit zwei Querstegen 6a). Die Figuren 12E und 12F zeigen schematisch Querschnitte einer derartigen y-förmigen Noppe 6 mit zwei Querstegen 6a. Die Figuren 13A bis 13D zeigen beispielhaft schematisch eine Draufsicht, eine Perspektivansicht, eine Vorderansicht und eine Seitenansicht einer v-förmigen Noppe 6 auf der Außenseite des Kunststoffinnenrohrs 3 (beispielhaft mit einem Quersteg 6a). Die Figuren 13E und 13F zeigen schematisch Querschnitte einer derartigen v-förmigen Noppe 6 mit einem Quersteg 6a.

Die Vielzahl von Noppen 6 auf der Außenseite des Kunststoffinnenrohrs 3 können auch mit unterschiedlichen Formen ausgebildet sein, z.B. mit verschiedenen v- förmigen, y-förmigen, pilzförmigen und auch anders geformten Noppen 6. So können z.B. die Aufweitungsabschnitte 3a und 3b und der Innenabschnitt 3c des Kunststoffinnenrohrs 3 unterschiedlich geformte Noppen 6 aufweisen. Die Noppen 6 können weiterhin als längliche Stege ausgebildet sein, die z.B. einen pilzförmigen, v- oder auch y-förmigen Querschnitt aufweisen. Bei v- oder auch y-förmigem Querschnitt können derartige Stege weiterhin eine Vielzahl von Querstegen aufweisen.

Die Noppen 6 auf der Außenseite der Aufweitungsabschnitte 3a können auch vorteilhaft dazu dienen, im Schritt des Einbringens des Formkerns 4 in das Kunststoffinnenrohr 3 durch Festhalten bzw. Fixieren oder Klemmen der außenseitigen Noppen 6 mittels eines Widerhalterzeugungsmittels zumindest an einem Ende des Kunststoffinnenrohrs 3 einen Widerhalt beim Aufziehen des Kunststoffinnenrohrs 3 auf eines oder mehrere Formkernteile (4a, 4b oder auch 4c) an dem Ende des Kunststoffinnenrohrs 3 bzw. beim Einführen eines oder mehrerer Formkernteile (4a, 4b oder auch 4c) in das Kunststoffinnerrohr 3 an dem Ende des Kunststoffinnenrohrs 3 zu erzeugen.

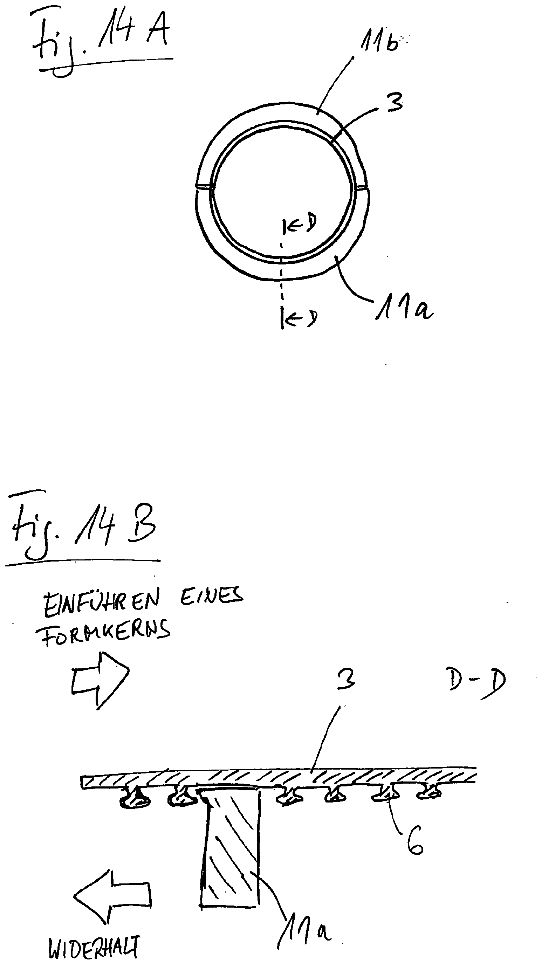

Beispielhaft wird in Fig. 14A eine untere Halbschale 11a und eine obere Halbschale 11b als Widerhalterzeugungsmittel verwendet, wobei die Halbschalen 11a und 11b zusammengesetzt einen gewünschten Querschnitt des Kunststoffinnenrohrs 3 nachformen. Fig. 14A zeigt eine Draufsicht der zusammengesetzten Halbschalen 11a und 11b, an denen bereits das Kunststoffinnenrohr 3 (ebenfalls in Draufsicht dargestellt) mittels der außenseitigen Noppen (nicht dargestellt) fixiert ist. Die vorliegende Erfindung ist jedoch nicht auf die Verwendung von Halbschalen 11a und 11b als Widerhalterzeugungsmittel begrenzt und es können auch andere Mittel benutzt werden, die dazu geeignet sind, das Kunststoffinnenrohr 3 mittels der außenseitigen Noppen teilweise oder um den gesamten Umfang des Kunststoffinnenrohrs 3 zu fixieren.

Fig. 14B zeigt beispielhaft einen Schnitt durch die untere Halbschale 11a entlang der Schnittlinie D-D in Fig. 14A und stellt schematisch dar, dass die Halbschale 11a dazu geeignet ist, als Widerhaltmittel verwendet zu werden, das einen Widerhalt erzeugt (entsprechend dem Linkspfeil in Fig. 14B), wenn ein oder mehrere Formkernteile in das Kunststoffinnenrohr 3 eingeführt werden sollen (entsprechend dem Rechtspfeil in Fig. 14B). Hierfür kann das außenseitige Noppenmuster auf dem Kunststoffinnenrohr 3 Bereiche, insbesondere Bereiche entlang des Umfangs des Kunststoffinnenrohrs 3, ohne Noppen aufweisen, an denen ein Widerhaltmittel angreifen kann. Die vor dem angreifenden Widerhaltmittel stehenden Noppen können dann gegen das Widerhalterzeugungsmittel einen Widerhalt beim Einbringen von Formkernteilen erzeugen.

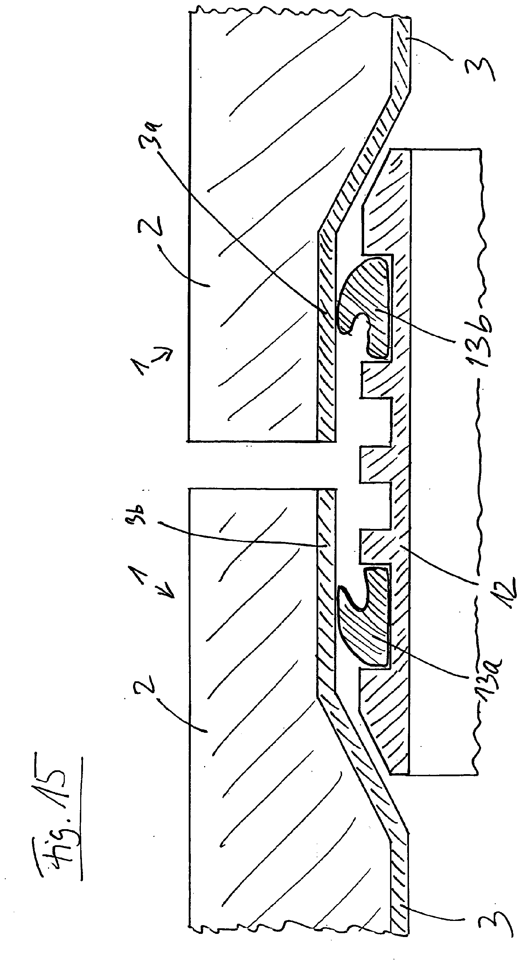

Fig. 15 zeigt beispielhaft einen Ausschnitt eines Längsschnitts durch die Endbereiche zweier zusammengesetzter Betonrohre 1 mit einem Grundkörper 2 und einem Kunststoffinnenrohr 3 nach einem Ausführungsbeispiel der vorliegenden Erfindung. Die Betonrohre 1 sind stoßseitig mittels einer Doppelmuffe 12 zusammengesetzt, wobei die Doppelmuffe in die jeweiligen Aufweitungsabschnitte 3b und 3a der Betonrohre 1 eingepasst ist. Nach diesem besonders vorteilhaften Ausführungsbeispiel der vorliegenden Erfindung weisen die Aufweitungsabschnitte 3a und 3b selbst keine Dichtungsmittel auf und können somit auf besonders einfache Weise wie vorstehend beschrieben durch Einführen bzw. Einbringen der Formkernteile ausgebildet werden. Dementsprechend umfasst die Doppelmuffe 12 Dichtungsringe 13a und 13b zum Abdichten des Rohrinneren des Rohrsystems aus den Betonrohren nach außen hin. Der Innenradius bzw. Innenquerschnitt der Doppelmuffe kann hierbei in einer vorteilhaften Ausgestaltung, wie in Fig. 15 beispielhaft dargestellt ist, im Wesentlichen dem Innenradius bzw. Innenquerschnitt des Innenabschnitts des Kunststoffinnenrohrs entsprechen. Die Doppelmuffe 12 kann zum Beispiel aus einem extrudierten Kunststoffprofilabschnitt zusammengeschweißt werden oder in einem einzigen Verfahrensschritt aus Kunststoff gespritzt werden.

In Fig. 15 ist dargestellt, dass die Aufweitungsabschnitte 3a und 3b eine im Wesentlichen glatte Innenfläche ohne Dichtungssitze aufweisen, wobei dementsprechend Dichtungsringe 13a und 13b an der Doppelmuffe 12 angebracht sind. So kann die Herstellung der Betonrohre weiter vereinfacht werden, da es nicht erforderlich ist, in einem aufwendigen Verfahren Dichtungssitze an den Innenwänden der Aufweitungsabschnitte 3a und 3b vorzusehen.

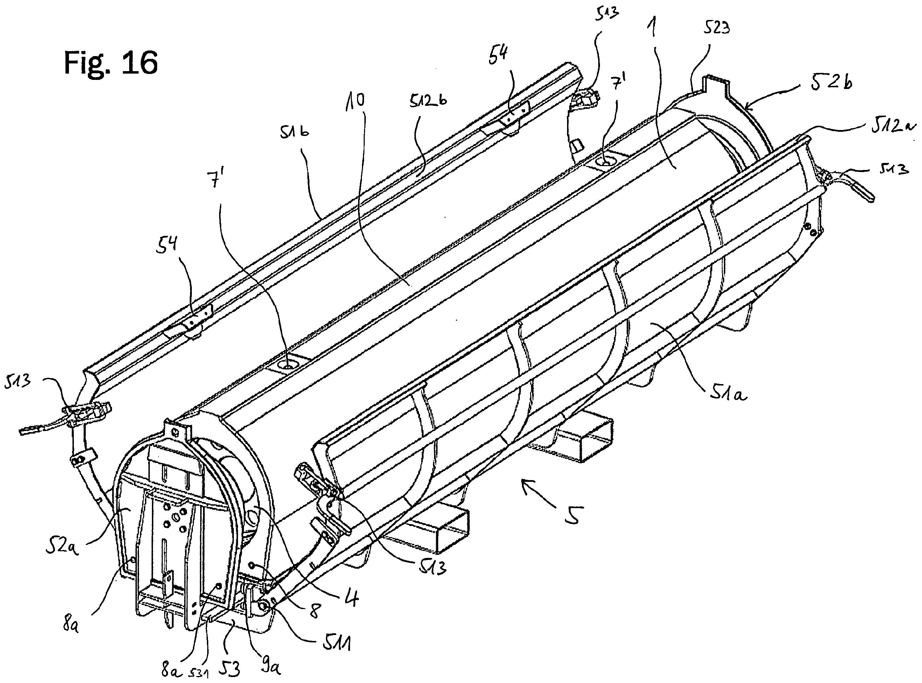

Fig. 16 zeigt eine beispielhafte schematische Perspektivansicht einer Außenform 5 gemäß einem Ausführungsbeispiel der vorliegenden Erfindung. Die Außenform 5 ist eine liegende Außenform, in der das Betonrohr 1 in einer Lage entsprechend der späteren Einbaulage des Betonrohrs, d.h. mit dem Betonrohrfuß nach unten weisend, gegossen wird. Die Außenform 5 umfasst zwei stirnseitige Stirnwände 52a und 52b, zwei längsseitige Seitenwände 51a und 51b und ein auf dem Boden stehendes Bodenteil 53, an dem die zwei Seitenwände 51a und 51b zum Öffnen und Schließen der Außenform 5 mittels jeweils eines oder mehrerer Gelenke 511 klappbar angebracht sind. Das Bodenteil 53 wirkt weiterhin als eine Negativform des Betonrohrfußes auf der Unterseite 9a des Betonrohrs 1.

Durch die Stirnwände 52a und 52b ist die Außenform 5 stirnseitig verschließbar und die Stirnwände 52a und 52b umfassen zur Abdichtung bei geschlossenem Zustand der Außenform 5 jeweils eine seitlich umlaufende Lippendichtung 523. Außerdem umfassen die Stirnwände 52a und 52b Halterungen 8a für Formen zur Ausbildung von Aufnahmen 8 für Lastübertragungsbolzen an der Stirnseite des Betonrohrs 1.

in Fig. 16 ist die Außenform beispielhaft geöffnet dargestellt, d.h. die Seitenwände 51a und 51b sind zumindest teilweise aufgeklappt und die Stirnwände 52a und 52b befinden sich in einer zumindest teilweise geöffneten Position. Durch die klappbaren Seitenwände 51a und 51b unterscheidet sich die gezeigte Außenform deutlich von einer herkömmlichen Trogform, wie sie z.B. in der WO 2009/112248 A1 gezeigt ist, d.h. einer nach oben großflächig geöffneten einteiligen Trogform, bei der die Seitenflächen feststehen.

Im inneren der Außenform 5 in Fig. 16 ist ein zumindest teilweise verfestigtes Betonrohr 1 angeordnet, das aus der Außenform entnommen werden kann. Im Inneren des Betonrohrs 1 ist ein Ende des Formkerns 4 sichtbar. Auf dem Kamm 10 des Betonrohrs 1 sind zum Versetzen des Betonrohrs analog zu den Tragschlaufen 7 in Fig. 1 zwei Versetzanker 7' eingegossen (beispielhaft Kugelkopfanker). Beim Eingießen des Betons bei verschlossener Außenform 5 können die Versetzanker oder andere Tragmittel (wie z.B. Tragschlaufen) an Haltemitteln 54 (in Fig. 16 beispielhaft Kalotten 54) gehalten werden, die an der Längskante 512b der einen Seitenwand 51b befestigt sind.

An den Enden der Seitenwände 51a und 51b sind beispielhaft jeweils Spannverschlüsse 513 angeordnet sind, die im geschlossenen Zustand der Außenform in die jeweiligen Stirnwände 52a und 52b eingreifen, um die Stirnwände 52a und 52b mit den Seitenwänden 51a und 51b zu fixieren. Nach Einfüllen des Betons und zumindest teilweisem Verfestigen des Betons können die Spannverschlüsse 513 geöffnet werden, um die Fixierung der Stirnwände 52a und 52b mit den Seitenwänden 51a und 51b zu lösen und die Außenform durch Aufklappen der Seitenwände 51a und 51b öffnen zu können. Das Betonrohr kann dann nach oben aus der Außenform 5 entnommen werden.

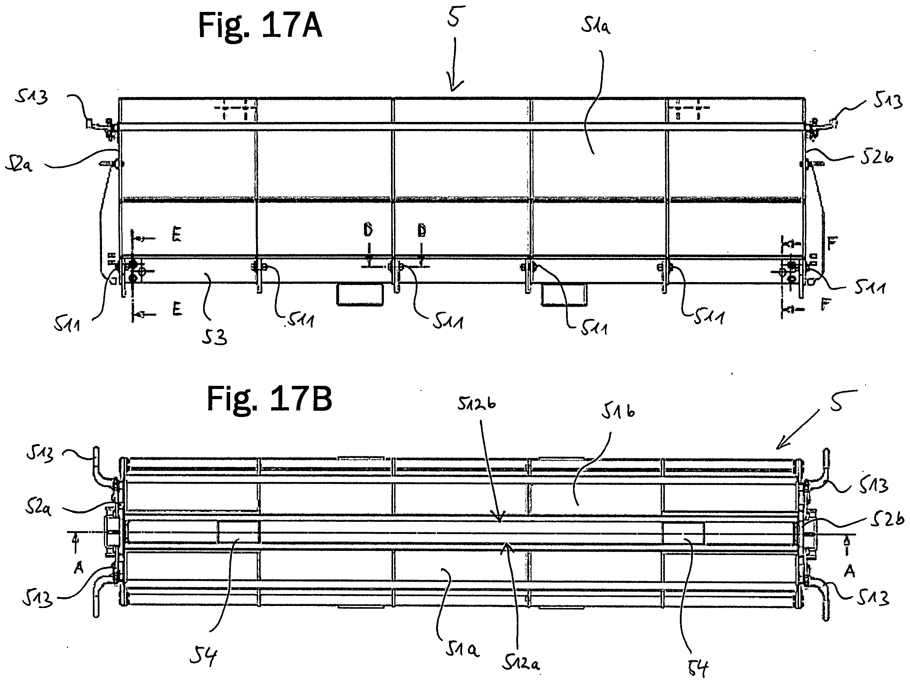

Fig. 17A zeigt eine beispielhafte schematische Seitenansicht der Außenform aus Fig. 16 und Fig. 17B zeigt eine beispielhafte schematische Draufsicht der Außenform aus Fig. 16. Gemäß diesem Ausführungsbeispiel sind die Seitenwände 51a und 51b, wie in Fig. 17A für die Seitenwand 51a gezeigt, durch sechs Gelenke 511 klappbar bzw. kippbar an dem Bodenteil 53 angebracht. In den Figuren 17A und 17B ist die Außenform 5 jeweils im geschlossenen Zustand gezeigt, in dem Beton eingefüllt werden kann. Hierzu steht zwischen den oberen Längskanten 512a und 512b der Seitenwände 51a und 51b ein Spalt zur Verfügung, durch den der Beton ins Innere der Außenform 5 eingefüllt werden kann. Außerdem wird zwischen den oberen Längskanten 512a und 512b ein Toleranzfüllbereich bereitgestellt, durch den das Dosieren des einzufüllenden Betons vereinfacht wird, da die erforderliche Genauigkeit im Gegensatz zu einer Trogform gemäß Fig. 2 reduziert werden kann.

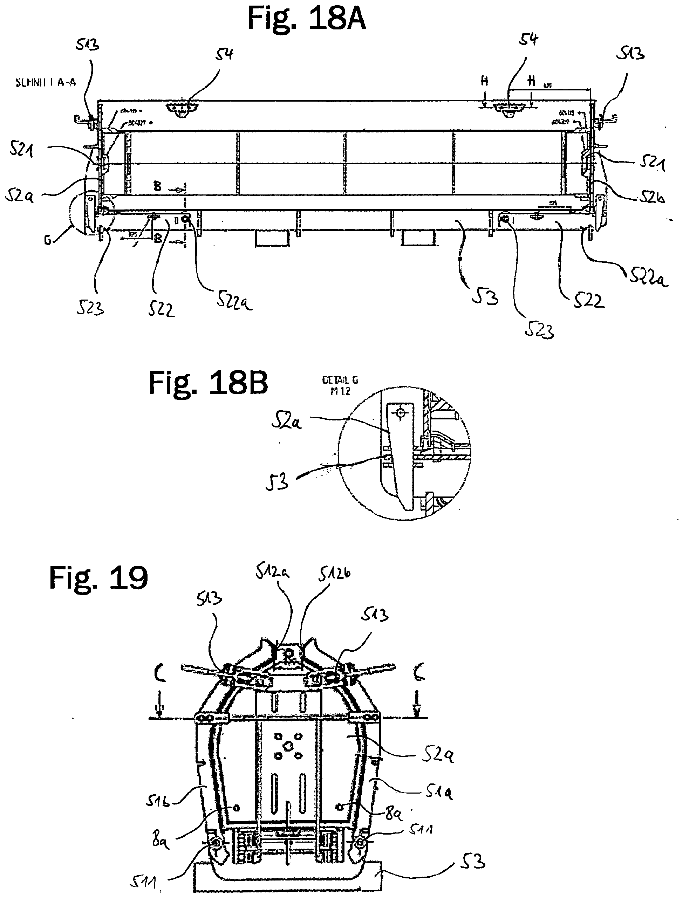

Fig. 18 A zeigt eine Schnittansicht entlang der Schnittebene A - A aus Fig. 17B und Fig. 18B zeigt eine Detailansicht des Ausschnitts G aus Fig. 18A. Hierbei ist erkennbar, das die Stirnwände 52a und 52b innenseitig jeweils Mittel 521 zum Zentrieren und Halten des Formkerns 4 aufweisen. Durch Schließen der Stirnseiten 52a und 52b kann somit im geschlossenen Zustand der Außenform 5 ein Formkern 4 in einer zentrierten Lage ausgerichtet und gehalten werden. Zum Öffnen und Schließen sind die Stirnseiten 52a und 52b jeweils auf einem Wagen 522 angebracht, der in Längsrichtung der Außenform auf Rollen 522a verfahrbar gelagert ist. Somit sind die Stirnwände 52a und 52b zum stirnseitigen Öffnen und Schließen der Außenform 5 in Längsrichtung der Außenform 5 verfahrbar.

Fig. 19 zeigt eine beispielhafte schematische Vorderansicht der Außenform aus Fig. 16. In dieser Vorderansicht ist erkennbar, dass die Seitenwände 51a und 51b in diesem Ausführungsbeispiel derart geformt sind, dass sich der Querschnitt der Außenform 5 ausgehend von dem Bodenteil 53 zu einem mittleren Abschnitt der Seitenwände 51a und 51b erst hin zu einer maximalen Breite der Außenform 5 erweitert und von dem mittleren Abschnitt der Seitenwände 51a und 51b hin zur Oberseite der Außenform 5 wieder verjüngt. Hierbei nähern sich die Seitenwände 51a und 51b im geschlossenen Zustand der Außenform 5 zur Oberseite der Außenform 5 derart an, dass zwischen den oberen Längskanten 512a und 512b der Seitenwände 51a und 51b der längliche Spalt ausgebildet werden kann, durch den Beton, insbesondere selbstverdichtender Beton, einfüllbar ist.

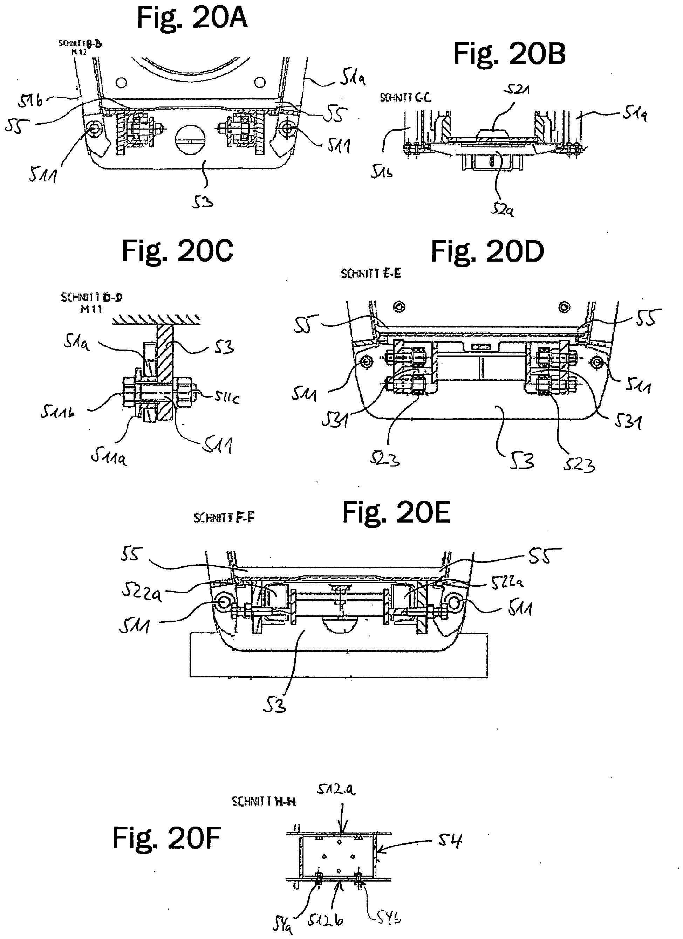

Weitere Details der Außenform gemäß dem vorstehend beschriebenen Ausführungsbeispiel der Figuren 16 bis 19 sind in den Schnittdarstellungen der Figuren 20A bis 20F dargestellt. Fig. 20A zeigt eine Schnittansicht entlang der Schnittebene B - B aus Fig. 18A, Fig. 20B zeigt eine Schnittansicht entlang der Schnittebene C - C aus Fig. 19, Fig. 20C zeigt eine Schnittansicht entlang der Schnittebene D - D aus Fig. 17A, Fig. 20D zeigt eine Schnittansicht entlang der Schnittebene E - E aus Fig. 17A, Fig. 20E zeigt eine Schnittansicht entlang der Schnittebene F - F aus Fig. 17A und Fig. 20F zeigt eine Schnittansicht entlang der Schnittebene H - H aus Fig. 18A.

Insbesondere ist in den Figuren 20A, 20D und 20E erkennbar, dass eine Dichtung 55 am Bodenteil 53 vorgesehen ist, um die jeweiligen Schlitze zwischen dem Bodenteil 53 und den Seitenwänden 51a und 51b abzudichten.

Fig. 20C zeigt schematisch Details eines Gelenks 511 umfassend eine Hülse 511a mit die Seitenwand 51a klappbar gelagert wird, wobei die Hülse mittels einer Schraube 511b und einer Mutter 511c an dem Bodenteil befestigt ist.

Fig. 20D zeigt Details der Lagerung des Wagens 522, der auf einer Schiene 531 des Bodenteils 53 mittels Kugellagern 523 (beispielhaft Rillenkugellager) des Wagens 522 geführt wird.

Fig. 20F zeigt schließlich Details der Halterung 54 für die Versetzanker 7', wobei die Halterung 54 mittels Schrauben 54a und 54b an der Längskante 512b der Seitenwand 52b festgeschraubt ist und im geschlossenen Zustand der Außenform 5 an der Längskante 512a der Seitenwand 52a anliegt.

In dem vorstehend beschriebenen Ausführungsbeispiel ist die Außenform 5 rein mechanisch und manuell bedienbar ausgeführt. Die vorliegende Erfindung ist jedoch nicht auf mechanisch und manuell bedienbare Außenformen beschränkt. Vielmehr ist es für eine weitere Automatisierung der Außenformen, denkbar, weitere mechanische und/oder zusätzliche hydraulische Bauteile vorzusehen, welche die das Rüsten, die Reinigung, und/oder die Entschalung weiter erleichtern bzw. automatisierbar machen.

Zusammenfassend stellt die vorliegende Erfindung ein Verfahren zum Herstellen von Betonrohren mit einem Grundkörper aus Beton und einem in dem Grundkörper verbleibenden Kunststoffinnenrohr bereit, das das in der WO 2009/112248 A2 beschriebene Herstellungsverfahren für Betonrohre verbessert und insbesondere effizienter und kostengünstiger ist. Nach dem Verfahren zur Herstellung eines einen Grundkörper aus Beton und ein Kunststoffinnenrohr umfassenden Betonrohrs können auf besonders kostengünstige und effiziente Weise besonders haltbare Betonrohre mit dünnwandigen Kunststoffinnenrohren hergestellt werden.

## Patentansprüche

1. Verfahren zum Herstellen eines einen Grundkörper (2) aus Beton und ein Kunststoffinnenrohr (3) umfassenden Betonrohrs (1) zum Leiten einer Flüssigkeit, umfassend die Schritte:
- Einbringen eines Formkerns (4) in das Kunststoffinnenrohr (3),
- Einbringen des Kunststoffinnenrohrs (3) in eine Außenform (5), und
- Einfüllen von Beton, insbesondere von selbstverdichten Beton, in einen Zwischenraum zwischen Außenform (5) und Kunststoffinnenrohr (3) zum Formen des Grundkörpers (2) aus Beton,
wobei das Kunststoffinnenrohr (3) nach dem Verfestigen des Betons als Innenschalung in dem Grundkörper (2) aus Beton verbleibt und der Formkern (4) nach zumindest teilweisem Verfestigen des Betons entnommen wird, und
wobei das Kunststoffinnenrohr (3) einen Innenabschnitt (3c) aufweist und der Formkern (4) derart an die Form des Kunststoffinnenrohrs (3) angepasst ist, dass ein Innenabschnitt des Formkerns (4) im Wesentlichen einen Querschnitt entsprechend dem Querschnitt des Innenabschnitts (3c) des Kunststoffinnenrohrs (3) aufweist;
**dadurch gekennzeichnet, dass**
das Kunststoffinnenrohr (3) aus einer Kunststofffolie gebildet ist, die sich von einem Ende des Formkerns (4) zum anderen Ende des Formkerns (4) durchgehend erstreckt, und weiterhin an beiden Enden jeweils Aufweitungsabschnitte (3a, 3b) umfasst, die einen größeren Querschnitt als der Innenabschnitt (3c) aufweisen, und
der Formkern (4) weiterhin derart an die Form des Kunststoffinnenrohrs (3) angepasst ist, dass ein erster Außenabschnitt des Formkerns (4) im Wesentlichen einen Querschnitt entsprechend dem Querschnitt des ersten Aufweitungsabschnitts (3a) an dem einem Ende des Kunststoffinnenrohrs (3) aufweist und ein zweiter Außenabschnitt des Formkerns (4) im Wesentlichen einen Querschnitt entsprechend dem Querschnitt des zweiten Aufweitungsabschnitts (3b) an dem anderen Ende des Kunststoffinnenrohrs (3) aufweist,
wobei der Formkern (4) zumindest zweiteilig ausgebildet ist und ein erstes Formkernteil (4a) des zumindest zweiteiligen Formkerns (4) den ersten Außenabschnitt umfasst und ein zweites Formkernteil (4b) des zumindest zweiteiligen Formkerns (4) den zweiten Außenabschnitt umfasst.

2. Verfahren nach Anspruch 1, **dadurch gekennzeichnet, dass**
der Formkern (4) zweiteilig ausgebildet ist und das erste Formkernteil (4a) oder das zweite Formkernteil (4b) im Wesentlichen den Innenabschnitt des Formkerns (4) umfasst; oder
der Formkern (4) zumindest dreiteilig ausgebildet ist und der Innenabschnitt des Formkerns (4) weiterhin zumindest ein mittleres drittes Formkernteil (4c) umfasst.

3. Verfahren nach Anspruch 2, **dadurch gekennzeichnet, dass**
der Innenabschnitt des Formkerns (4) bzw. das zumindest eine mittlere dritte Formkernteil (4c) im Wesentlichen zylindrisch ausgebildet ist; oder
der Innenabschnitt des Formkerns (4) bzw. das dritte Formkernteil (4c) sich minimal verjüngend, insbesondere minimal konisch, ausgebildet ist oder zumindest einen sich minimal verjüngenden, insbesondere minimal konisch ausgebildeten, Abschnitt umfasst.

4. Verfahren nach zumindest einem der Ansprüche 1 bis 3, **dadurch gekennzeichnet, dass**
das Kunststoffinnenrohr (3) vor dem Einbringen des Formkerns (4) in das Kunststoffinnenrohr (3) einen im Wesentlichen konstanten Querschnitt aufweist und der Schritt des Einbringens des Formkerns (4) in das Kunststoffinnenrohr (3) einen Schritt des Ausformens der Aufweitungsabschnitte (3a, 3b) an den Enden des Kunststoffinnenrohrs (3) mittels Einführen der Außenabschnitte des Formkerns (4) umfasst.

5. Verfahren nach Anspruch 4, **dadurch gekennzeichnet, dass**
ein innerer Abschnitt des ersten und des zweiten Formkernteils (4a, 4b) jeweils einem äußeren Abschnitt des Innenabschnitts des Formkerns (4) entspricht, der jeweils in einem an den Innenabschnitt anschließenden weiteren Abschnitt des ersten bzw. zweiten Formkernteils (4a, 4b) kontinuierlich, insbesondere konisch, in den jeweiligen Außenabschnitt des ersten bzw. zweiten Formkernteils (4a, 4b) übergeht.

6. Verfahren nach Anspruch 4 oder 5, **dadurch gekennzeichnet, dass** der Schritt des Einbringens des Formkerns (4) in das Kunststoffinnenrohr (3) die folgenden Schritte umfasst:
- Einführen des inneren Abschnitts des ersten Formkernteils (4a) in das Kunststoffinnenrohr (3) an dem einen Ende des Kunststoffinnenrohrs (3) und/oder Einführen des inneren Abschnitts des zweiten Formkernteils (4b) in das Kunststoffinnenrohr (3) an dem anderen Ende des Kunststoffinnenrohrs (3),
- Erhitzen des Kunststoffinnenrohrs (3) zumindest an dem einen Ende, in das der innere Abschnitt des ersten Formkernteils (4a) eingebracht ist, und/oder Erhitzen des Kunststoffinnenrohrs (3) zumindest an dem anderen Ende, in das der innere Abschnitt des zweiten Formkernteils (4b) eingebracht ist, und
- Einführen des Außenabschnitts des ersten Formkernteils (4a) in das Kunststoffinnenrohr (3) zum thermoplastischen Ausformen des ersten Aufweitungsabschnitts (3a) des Kunststoffinnenrohrs (3) an dem einen Ende nach Erhitzen und/oder Einführen des Außenabschnitts des zweiten Formkernteils (4b) in das Kunststoffinnenrohr (3) zum thermoplastischen Ausformen des zweiten Aufweitungsabschnitts (3b) des Kunststoffinnenrohrs (3) an dem anderen Ende nach Erhitzen.

7. Verfahren nach zumindest einem der Ansprüche 1 bis 6, **dadurch gekennzeichnet, dass**
die Kunststofffolie zu dem Kunststoffinnenrohr (3) geschweißt ist, insbesondere durch Stumpfschweißen.

8. Verfahren nach zumindest einem der Ansprüche 1 bis 7, **dadurch gekennzeichnet, dass**
das Kunststoffinnenrohr (3) außenseitig eine Vielzahl von Noppen (6) zum Verankern des Kunststoffinnenrohrs (3) nach dem zumindest teilweisen Verfestigen des Betons in dem Grundkörper (2) aus Beton, insbesondere vor Entnahme des Formkerns (4), aufweist.

9. Verfahren nach Anspruch 8, **dadurch gekennzeichnet, dass**
die Dichte der Noppen (6) im Bereich der Enden des Kunststoffinnenrohrs (3), insbesondere im Bereich der Aufweitungsabschnitte (3a, 3b), grösser ist als die Dichte der Noppen (6) im Bereich des Innenabschnitts (3c) des Kunststoffinnenrohrs (3).

10. Verfahren nach zumindest einem der Ansprüche 1 bis 9, **dadurch gekennzeichnet, dass**
die Außenform (5) eine stehende Außenform ist, in der das Betonrohr (1) stehend gefertigt wird; oder
die Außenform (5) eine liegende Trogschalung oder eine liegende Außenform mit klappbaren Seitenwänden ist, wobei das Betonrohr (1) in der Außenform (5) liegend gegossen wird.

11. Verfahren nach zumindest einem der Ansprüche 1 bis 9, **dadurch gekennzeichnet, dass**
die Außenform (5) eine stehende Außenform ist, in der das Betonrohr (1) stehend gefertigt wird,
wobei das Betonrohr (1) in Überlänge hergestellt wird und einen Schritt Ablängen des Betonrohrs (1) auf eine gewünschte Länge durch Abtrennen eines oberen Überstandabschnitts des Betonrohrs (1) umfasst.

12. Verfahren nach zumindest einem der Ansprüche 1 bis 11, **dadurch gekennzeichnet, dass**
die Aufweitungsabschnitte (3a, 3b) eine im Wesentlichen glatte Innenfläche aufweisen und dazu geeignet sind, eine Zwischenmuffe (12) aufzunehmen, die an den Querschnitt der Aufweitungsabschnitte (3a, 3b) angepasst ist und außenseitig ein Dichtungsmittel (13a; 13b), insbesondere einen Dichtungsring aufweist.

13. Formkern mit Kunststoffinnenrohr zur Verwendung in einem Verfahren nach zumindest einem der Ansprüche 1 bis 12, wobei der Formkern (4) in das Kunststoffinnenrohr (3) eingebracht ist,
das Kunststoffinnenrohr (3) einen Innenabschnitt (3c) aufweist, und der Formkern (4) derart an die Form des Kunststoffinnenrohrs (3) angepasst ist, dass ein Innenabschnitt des Formkerns (4) im Wesentlichen einen Querschnitt entsprechend einem Querschnitt eines Innenabschnitts (3c) des Kunststoffinnenrohrs (3) aufweist,
**dadurch gekennzeichnet, dass**
das Kunststoffinnenrohr (3) aus einer Kunststofffolie gebildet ist, die sich von einem Ende des Formkerns (4) zum anderen Ende des Formkerns (4) durchgehend erstreckt, und weiterhin an beiden Enden jeweils Aufweitungsabschnitte (3a, 3b) umfasst, die einen größeren Querschnitt als der Innenabschnitt (3c) aufweisen,
wobei ein erster Außenabschnitt des Formkerns (4) im Wesentlichen einen Querschnitt entsprechend einem Querschnitt eines ersten Aufweitungsabschnitts (3a) an einem Ende des Kunststoffinnenrohrs (3) aufweist und ein zweiter Außenabschnitt des Formkerns (4) im Wesentlichen einen Querschnitt entsprechend einem Querschnitt eines zweiten Aufweitungsabschnitts (3b) an einem anderen Ende des Kunststoffinnenrohrs (3) aufweist, und
wobei der Formkern (4) zumindest zweiteilig ausgebildet ist und ein erstes Formkernteil (4a) des zumindest zweiteiligen Formkerns (4) den ersten Außenabschnitt umfasst und ein zweites Formkernteil (4b) des zumindest zweiteiligen Formkerns (4) den zweiten Außenabschnitt umfasst.

14. Form zum Herstellen eines einen Grundkörper (2) aus Beton und ein Kunststoffinnenrohr (3) umfassenden Betonrohrs (1) zum Leiten einer Flüssigkeit gemäß einem Verfahren nach zumindest einem der Ansprüche 1 bis 12, umfassend
eine Außenform (5) und
einen Formkern (4), der in ein Kunststoffinnenrohr (3) eingebracht ist,
wobei das Kunststoffinnenrohr (3) einen Innenabschnitt (3c) aufweist und der Formkern (4) derart an die Form des Kunststoffinnenrohrs (3) angepasst ist, dass ein Innenabschnitt des Formkerns (4) im Wesentlichen einen Querschnitt entsprechend dem Querschnitt des Innenabschnitts (3c) des Kunststoffinnenrohrs (3) aufweist,
**dadurch gekennzeichnet, dass**
das Kunststoffinnenrohr (3) aus einer Kunststofffolie gebildet ist, die sich von einem Ende des Formkerns (4) zum anderen Ende des Formkerns (4) durchgehend erstreckt, und weiterhin an beiden Enden jeweils Aufweitungsabschnitte (3a, 3b) umfasst, die einen größeren Querschnitt als der Innenabschnitt (3c) aufweisen,
wobei ein erster Außenabschnitt des Formkerns (4) im Wesentlichen einen Querschnitt entsprechend dem Querschnitt des ersten Aufweitungsabschnitts (3a) an dem einem Ende des Kunststoffinnenrohrs (3) aufweist und ein zweiter Außenabschnitt des Formkerns (4) im Wesentlichen einen Querschnitt entsprechend dem Querschnitt des zweiten Aufweitungsabschnitts (3b) an dem anderen Ende des Kunststoffinnenrohrs (3) aufweist, und
wobei der Formkern (4) zumindest zweiteilig ausgebildet ist und ein erstes Formkernteil (4a) des zumindest zweiteiligen Formkerns (4) den ersten Außenabschnitt umfasst und ein zweites Formkernteil (4b) des zumindest zweiteiligen Formkerns (4) den zweiten Außenabschnitt umfasst.

15. Form nach Anspruch 14, **dadurch gekennzeichnet, dass**
die Außenform (5) eine liegende Außenform (5) ist, die zwei stirnseitige Stirnwände (52a, 52b) mit Mitteln (521) zum Halten des Formkerns (4), zwei längsseitige Seitenwände (51a, 51b) und ein Bodenteil (53) umfasst, an dem die zwei Seitenwände (51a, 51b) zum Öffnen und Schließen der Außenform (5) mittels jeweils eines oder mehrerer Gelenke (511) klappbar angebracht sind;
wobei die Form derart eingerichtet ist, dass das Betonrohr (1) entsprechend der späteren Einbaulage des Betonrohrs (1) gießbar ist, wobei das Bodenteil (53) als eine Negativform des Betonrohrfußes auf der Unterseite (9a) des Betonrohrs (1) ausgebildet ist; und
wobei die beiden oberen Längskanten (512a, 512b) der Seitenwände (51a, 51b) derart ausgebildet sind, dass in dem Spalt zwischen den beiden oberen Längskanten (512a, 512b) der Seitenwände (51a, 51b) bei geschlossener Außenform (5) ein als Füllausgleichsbereich für Beton wirkendes Füllvolumen bereitgestellt wird.

## Claims

1. A method for producing a concrete pipe (1), which comprises a basic body (2) made of concrete and a plastic inner pipe (3) and is intended for conducting a liquid, with said method comprising the steps of:
- introducing a mould core (4) into the plastic inner pipe (3),
- introducing the plastic inner pipe (3) into an outer mould (5), and
- pouring concrete, particularly self-compacting concrete, into an intermediate space between the outer mould (5) and the plastic inner pipe (3) in order to form the basic body (2) made of concrete,
wherein the plastic inner pipe (3) remains in the basic body (2) made of concrete after the concrete has solidified and the mould core (4) is removed after the concrete has at least partially solidified, and
wherein the plastic inner pipe (3) has an inner section (3c) and the mould core (4) is adapted to the shape of the plastic inner pipe (3) in such a way that an inner section of the mould core (4) essentially has a cross section corresponding to the cross section of the inner section (3c) of the plastic inner pipe (3),
**characterized in that**
the plastic inner pipe (3) is formed of a plastic film, which extends continuously from one end of the mould core (4) to the other end of the mould core (4), and furthermore has, at both ends, respective widened sections (3a, 3b) with a larger cross section than the inner section (3c), and **in that**
the mould core (4) furthermore is adapted to the shape of the plastic inner pipe (3) in such a way that a first outer section of the mould core (4) essentially has a cross section corresponding to the cross section of the first widened section (3a) at one end of the plastic inner pipe (3) and a second outer section of the mould core (4) essentially has a cross section corresponding to the cross section of the second widened section (3b) at the other end of the plastic inner pipe (3),
wherein the mould core (4) is formed of at least two parts and a first mould core part (4a) of the at least two-part mould core (4) comprises the first outer section and a second mould core part (4b) of the at least two-part mould core (4) comprises the second outer section.

2. The method according to claim 1, **characterized in that**
the mould core (4) is formed of two parts and the first mould core part (4a) or the second mould core part (4b) essentially comprises the inner section of the mould core (4); or
the mould core (4) is formed of at least three parts and the inner section of the mould core (4) furthermore comprises at least one central third mould core part (4c).

3. The method according to claim 2, **characterized in that** the inner section of the mould core (4) or the at least one central third mould core part (4c) essentially is designed cylindrically; or
the inner section of the mould core (4) or the third mould core part (4c) is designed minimally tapered, particularly minimally conical, or at least comprises a section that is designed minimally tapered, particularly minimally conical.

4. The method according to at least one of claims 1 to 3, **characterized in that**
the plastic inner pipe (3) has an essentially constant cross section prior to the introduction of the mould core (4) into the plastic inner pipe (3) and the step of introducing the mould core (4) into the plastic inner pipe (3) comprises a step of forming the widened sections (3a, 3b) at the ends of the plastic inner pipe (3) by inserting the outer sections of the mould core (4).

5. The method according to claim 4, **characterized in that**
an inner section of the first and the second mould core part (4a, 4b) respectively corresponds to an outer section of the inner section of the mould core (4), which respectively transforms continuously, particularly conically, into the respective outer section of the first or second mould core part (4a, 4b) in another section of the first or second mould core part (4a, 4b) located adjacent to the inner section.

6. The method according to claim 4 or 5, **characterized in that** the step of introducing the mould core (4) into the plastic inner pipe (3) comprises the following steps:
- inserting the inner section of the first mould core part (4a) into the plastic inner pipe (3) at one end of the plastic inner pipe (3) and/or inserting the inner section of the second mould core part (4b) into the plastic inner pipe (3) at the other end of the plastic inner pipe (3),
- heating the plastic inner pipe (3) at least at the one end, into which the inner section of the first mould core part (4a) is introduced, and/or heating the plastic inner pipe (3) at least at the other end, into which the inner section of the second mould core part (4b) is introduced, and
- inserting the outer section of the first mould core part (4a) into the plastic inner pipe (3) in order to thermoplastically form the first widened section (3a) of the plastic inner pipe (3) at the one end after heating and/or inserting the outer section of the second mould core part (4b) into the plastic inner pipe (3) in order to thermoplastically form the second widened section (3b) of the plastic inner pipe (3) at the other end after heating.

7. The method according to at least one of claims 1 to 6, **characterized in that**
the plastic film is welded so as to form the plastic inner pipe (3), particularly by means of butt welding.

8. The method according to at least one of claims 1 to 7, **characterized in that** the plastic inner pipe (3) has on its outer side a plurality of nubs (6) for anchoring the plastic inner pipe (3) in the basic body (2) made of concrete after the concrete has at least partially solidified, particularly prior to the removal of the mould core (4).

9. The method according to claim 8, **characterized in that**
the density of the nubs (6) in the region of the ends of the plastic inner pipe (3), particularly in the region of the widened sections (3a, 3b), is greater than the density of the nubs (6) in the region of the inner section (3c) of the plastic inner pipe (3).

10. The method according to at least one of claims 1 to 9, **characterized in that**
the outer mould (5) is a vertical outer mould, in which the concrete pipe (1) is produced vertically; or
the outer mould (5) is a horizontal trough formwork or a horizontal outer mould with foldable sidewalls, wherein the concrete pipe (1) is horizontally cast in the outer mould (5).

11. The method according to at least one of claims 1 to 9, **characterized in that**
the outer mould (5) is a vertical outer mould, in which the concrete pipe (1) is produced vertically,
wherein the concrete pipe (1) is produced with an excess length and its production comprises a step of cutting the concrete pipe (1) to a desired length by separating an upper protruding section of the concrete pipe (1).

12. The method according to at least one of claims 1 to 11, **characterized in that**
the widened sections (3a, 3b) have an essentially smooth inner surface and are suitable for accommodating an intermediate coupling (12), which is adapted to the cross section of the widened sections (3a, 3b) and has on its outer side a sealing means (13a; 13b), particularly a sealing ring.

13. A mould core with a plastic inner pipe for use in a method according to at least one of claims 1 to 12, wherein the mould core (4) is introduced into the plastic inner pipe (3), and
wherein the plastic inner pipe (3) has an inner section (3c) and the mould core (4) is adapted to the shape of the plastic inner pipe (3) in such a way that an inner section of the mould core (4) essentially has a cross section corresponding to a cross section of the inner section (3c) of the plastic inner pipe (3),
**characterized in that**
the plastic inner pipe (3) is formed of a plastic film, which extends continuously from one end of the mould core (4) to the other end of the mould core (4), and furthermore has, at both ends, respective widened sections (3a, 3b) with a larger cross section than the inner section (3c),
wherein a first outer section of the mould core (4) essentially has a cross section corresponding to a cross section of a first widened section (3a) at one end of the plastic inner pipe (3) and a second outer section of the mould core (4) essentially has a cross section corresponding to a cross section of a second widened section (3b) at the other end of the plastic inner pipe (3), and
wherein the mould core (4) is formed of at least two parts and a first mould core part (4a) of the at least two-part mould core (4) comprises the first outer section and a second mould core part (4b) of the at least two-part mould core (4) comprises the second outer section.

14. A mould for producing a concrete pipe (1), which comprises a basic body (2) made of concrete and a plastic inner pipe (3) and is intended for conducting a liquid, by means of a method according to at least one of claims 1 to 12, with said mould comprising
an outer mould (5) and
a mould core (4) that is introduced into a plastic inner pipe (3),
wherein the plastic inner pipe (3) has an inner section (3c) and the mould core (4) is adapted to the shape of the plastic inner pipe (3) in such a way that an inner section of the mould core (4) essentially has a cross section corresponding to a cross section of the inner section (3c) of the plastic inner pipe (3),
**characterized in that**
the plastic inner pipe (3) is formed of a plastic film, which extends continuously from one end of the mould core (4) to the other end of the mould core (4), and furthermore has, at both ends, respective widened sections (3a, 3b) with a larger cross section than the inner section (3c),
wherein a first outer section of the mould core (4) essentially has a cross section corresponding to a cross section of a first widened section (3a) at one end of the plastic inner pipe (3) and a second outer section of the mould core (4) essentially has a cross section corresponding to a cross section of a second widened section (3b) at the other end of the plastic inner pipe (3), and
wherein the mould core (4) is formed of at least two parts and a first mould core part (4a) of the at least two-part mould core (4) comprises the first outer section and a second mould core part (4b) of the at least two-part mould core (4) comprises the second outer section.

15. The mould according to claim 14, **characterized in that**
the outer mould (5) is a horizontal outer mould (5), which comprises two end walls (52a, 52b) on the face sides with means (521) for holding the mould core (4), two sidewalls (51a, 51b) on the longitudinal sides and a bottom part (53), on which the two sidewalls (51a, 51b) are respectively mounted in a foldable manner by means of one or more hinges (511) in order to open and close the outer mould (5),
wherein the mould is designed in such a way that the concrete pipe (1) can be cast in accordance with the subsequent installation position of the concrete pipe (1), wherein the bottom part (53) is realized in the form of a negative mould of the concrete pipe base on the underside (9a) of the concrete pipe (1), and
wherein the two upper longitudinal edges (512a, 512b) of the sidewalls (51a, 51b) are designed in such a way that a filling volume, which acts as a filling compensation region for concrete, is made available in the gap between the two upper longitudinal edges (512a, 512b) of the sidewalls (51a, 51b) when the outer mould (5) is closed.

## Revendications

1. Procédé pour fabriquer un tube en béton (1) comprenant un corps de base (2) en béton et un tube intérieur en plastique (3) pour diriger un liquide, comprenant les étapes consistant à :
- introduire un noyau de moulage (4) dans le tube intérieur en plastique (3),
- introduire le tube intérieur en plastique (3) dans un moule extérieur (5), et
- remplir de béton, en particulier de béton autocompactant, un espace intermédiaire entre le moule extérieur (5) et le tube intérieur en plastique (3) pour mouler le corps de base (2) en béton,
sachant que le tube intérieur en plastique (3) reste après la prise du béton en tant que coffrage intérieur dans le corps de base (2) en béton et le noyau de moulage (4) est enlevé après la prise au moins partielle du béton, et
sachant que le tube intérieur en plastique (3) comporte une section intérieure (3c) et le noyau de moulage (4) est adapté au moule du tube intérieur en plastique (3) de telle manière qu'une section intérieure du noyau de moulage (4) comporte pour l'essentiel une section correspondant à la section de la section intérieure (3c) du tube intérieur en plastique (3),
**caractérisé en ce que**
le tube intérieur en plastique (3) est formé à partir d'une feuille de matière plastique, qui s'étend complètement d'une extrémité du noyau de moulage (4) à l'autre extrémité du noyau de moulage (4) et comprend respectivement en plus aux deux extrémités des sections d'élargissement (3a, 3b), qui comportent une section plus grande que la section intérieure (3c), et
le noyau de moulage (4) est adapté en plus au moule du tube intérieur en plastique (3) de telle manière qu'une première section extérieure du noyau de moulage (4) comporte pour l'essentiel une section correspondant à la section de la première section d'élargissement (3a) à une extrémité du tube intérieur en plastique (3) et une deuxième section extérieure du noyau de moulage (4) comporte pour l'essentiel une section correspondant à la section de la deuxième section d'élargissement (3b) à l'autre extrémité du tube intérieur en plastique (3),
sachant que le noyau de moulage (4) est constitué au moins en deux parties et une première partie de noyau de moulage (4a) du noyau de moulage au moins en deux parties (4) comprend la première section extérieure et une deuxième partie de noyau de moulage (4b) du noyau de moulage au moins en deux parties (4) comprend la deuxième section extérieure.

2. Procédé selon la revendication 1, **caractérisé en ce que**
le noyau de moulage (4) est constitué en deux parties et la première partie de noyau de moulage (4a) ou la deuxième partie de noyau de moulage (4b) comprend pour l'essentiel la section intérieure du noyau de moulage (4), ou
le noyau de moulage (4) est constitué au moins en trois parties et la section intérieure du noyau de moulage (4) comprend en plus au moins une troisième partie de noyau de moulage centrale (4c).

3. Procédé selon la revendication 2, **caractérisé en ce que**
la section intérieure du noyau de moulage (4) ou au moins une troisième partie de noyau de moulage centrale (4c) est constituée pour l'essentiel cylindrique, ou
la section intérieure du noyau de moulage (4) ou la troisième partie de noyau de moulage (4c) est constituée se rétrécissant de façon minimum, en particulier au minimum de façon conique ou comprend au moins une section se rétrécissant de façon minimum, en particulier au minimum de façon conique.

4. Procédé selon au moins l'une quelconque des revendications 1 à 3, **caractérisé en ce que**
le tube intérieur en plastique (3) comporte une section pour l'essentiel constante avant l'introduction du noyau de moulage (4) dans le tube intérieur en plastique (3) et **en ce que** la phase d'introduction du noyau de moulage (4) dans le tube intérieur en plastique (3) comprend une phase de déformation des sections d'élargissement (3a, 3b) aux extrémités du tube intérieur en plastique (3) en introduisant les sections extérieures du noyau de moulage (4).

5. Procédé selon la revendication 4, **caractérisé en ce qu'**
une section intérieure de la première et de la deuxième partie de noyau de moulage (4a, 4b) correspond respectivement à une section extérieure de la section intérieure du noyau de moulage (4), qui passe respectivement dans une autre section se raccordant à la section intérieure de la première ou deuxième partie de noyau de moulage (4a, 4b) de façon continue, en particulier de façon conique, dans la section extérieure respective de la première ou deuxième partie de noyau de moulage (4a, 4b).

6. Procédé selon la revendication 4 ou 5, **caractérisé en ce que** la phase d'introduction du noyau de moulage (4) dans le tube intérieur en plastique (3) comprend les étapes suivantes :
- introduction de la section intérieure de la première partie de noyau de moulage (4a) dans le tube intérieur en plastique (3) à une extrémité du tube intérieur en plastique (3) et/ou introduction de la section intérieure de la deuxième partie de noyau de moulage (4b) dans le tube intérieur en plastique (3) à l'autre extrémité du tube intérieur en plastique (3),
- chauffage du tube intérieur en plastique (3) au moins à une extrémité, dans laquelle la section intérieure de la première partie de noyau de moulage (4a) est introduite et/ou chauffage du tube intérieur en plastique (3) au moins à l'autre extrémité dans laquelle la section intérieure de la deuxième partie de noyau de moulage (4b) est introduite, et
- introduction de la section extérieure de la première partie de noyau de moulage (4a) dans le tube intérieur en plastique (3) pour la déformation thermoplastique de la première section d'élargissement (3a) du tube intérieur en plastique (3) à une extrémité après chauffage et/ou introduction de la section extérieure de la deuxième partie de noyau de moulage (4b) dans le tube intérieur en plastique (3) pour déformation thermoplastique de la deuxième section d'élargissement (3b) du tube intérieur en plastique (3) à l'autre extrémité après chauffage.

7. Procédé selon au moins l'une quelconque des revendications 1 à 6, **caractérisé en ce que**
la feuille de matière plastique est soudée au tube intérieur en plastique (3), en particulier par soudage en bout.

8. Procédé selon au moins l'une quelconque des revendications 1 à 7, **caractérisé en ce que**
le tube intérieur en plastique (3) comporte extérieurement une pluralité de picots (6) pour ancrer le tube intérieur en plastique (3) après la prise au moins partielle du béton dans le corps de base (2), en particulier avant l'enlèvement du noyau de moulage (4).

9. Procédé selon la revendication 8, **caractérisé en ce que**
la densité des picots (6) dans la zone des extrémités du tube intérieur en plastique (3), en particulier dans la zone des sections d'élargissement (3a, 3b) est plus grande que la densité des picots (6) dans la zone de la section intérieure (3c) du tube intérieur en plastique (3) .

10. Procédé selon au moins l'une quelconque des revendications 1 à 9, **caractérisé en ce que**
le moule extérieur (5) est un moule extérieur vertical dans lequel le tube en béton (1) est réalisé verticalement, ou
le moule extérieur (5) est un coffrage en forme d' auge ou un moule extérieur horizontal avec des parois latérales repliables, sachant que le tube en béton (1) est coulé horizontalement dans le moule extérieur (5).

11. Procédé selon au moins l'une quelconque des revendications 1 à 9, **caractérisé en ce que**
le moule extérieur (5) est un moule extérieur vertical dans lequel le tube en béton (1) est fabriqué verticalement,
sachant que le tube en béton (1) est fabriqué en surlongueur et qu'une phase comprend une mise à longueur du tube en béton (1) à une longueur souhaitée par sectionnement d'une section en saillie supérieure du tube en béton (1).

12. Procédé selon au moins l'une quelconque des revendications 1 à 11, **caractérisé en ce que**
les sections d'élargissement (3a, 3b) comportent pour l'essentiel une surface intérieure lisse et sont adaptées pour recevoir un manchon intermédiaire (12) qui est adapté à la section des sections d'élargissement (3a, 3b) et comporte extérieurement un moyen d'étanchéification (13a, 13b), en particulier une bague d'étanchéité.

13. Noyau de moulage avec tube intérieur en plastique pour utilisation dans un procédé selon au moins l'une quelconque des revendications 1 à 12, sachant que le noyau de moulage (4) est introduit dans le tube intérieur en plastique (3),
le tube intérieur en plastique (3) comporte une section intérieure (3c) et le noyau de moulage (4) est adapté au moule du tube intérieur en plastique (3) de telle manière qu'une section intérieure du noyau de moulage (4) comporte pour l'essentiel une section correspondant à une section d'une section intérieure (3c) du tube intérieur en plastique (3),
**caractérisé en ce que**
le tube intérieur en plastique (3), est formé à partir d'une feuille de matière plastique, qui s'étend complètement d'une extrémité du noyau de moulage (4) à l'autre extrémité du noyau de moulage (4) et comprend respectivement en plus aux deux extrémités des sections d'élargissement (3a, 3b), qui comportent une section plus grande que la section intérieure (3c),
sachant qu'une première section extérieure du noyau de moulage (4) comporte pour l'essentiel une section correspondant à une section d'une première section d'élargissement (3a) à une extrémité du tube intérieur en plastique (3) et une deuxième section extérieure du noyau de moulage (4) comporte pour l'essentiel une section correspondant à une section d'une deuxième section d'élargissement (3b) à une autre extrémité du tube intérieur en plastique (3), et
sachant que le noyau de moulage (4) est constitué au moins en deux parties et une première partie de noyau de moulage (4a) du noyau de moulage (4) au moins en deux parties comprend la première section extérieure et une deuxième partie de noyau de moulage (4b) du noyau de moulage (4) au moins en deux parties comprend la deuxième section extérieure.

14. Moule pour fabriquer un tube en béton (1) comprenant un corps de base (2) en béton et un tube intérieur en plastique (3) pour diriger un liquide selon un procédé selon au moins l'une quelconque des revendications 1 à 12, comprenant
un moule extérieur (5) et
un noyau de moulage (4), qui est introduit dans un tube intérieur en plastique (3),
sachant que le tube intérieur en plastique (3) comporte une section intérieure (3c) et le noyau de moulage (4) est adapté au moule du tube intérieur en plastique (3) de telle manière qu'une section intérieure du noyau de moulage (4) comporte pour l'essentiel une section correspondant à la section de la section intérieure (3c) du tube intérieur en plastique (3),
**caractérisé en ce que**
le tube intérieur en plastique (3), est formé à partir d'une feuille de matière plastique, qui s'étend complètement d'une extrémité du noyau de moulage (4) à l'autre extrémité du noyau de moulage (4) et comprend respectivement en plus aux deux extrémités des sections d'élargissement (3a, 3b), qui comportent une section plus grande que la section intérieure (3c),
sachant qu'une première section extérieure du noyau de moulage (4) comporte pour l'essentiel une section correspondant à la section de la première section d'élargissement (3a) à une extrémité du tube intérieur en plastique (3) et une deuxième section extérieure du noyau de moulage (4) comporte pour l'essentiel une section correspondant à la section de la deuxième section d'élargissement (3b) à l' autre extrémité du tube intérieur en plastique (3) et
sachant que le noyau de moulage (4) est constitué au moins en deux parties et une première partie de noyau de moulage (4a) du noyau de moulage (4) au moins en deux parties comprend la première section extérieure et une deuxième partie de noyau de moulage (4b) du noyau de moulage (4) au moins en deux parties comprend la deuxième section extérieure.

15. Moule selon la revendication 14, **caractérisé en ce que**
le moule extérieur (5) est un moule extérieur horizontal (5), qui comprend deux parois frontales longitudinales (52a, 52b) avec des moyens (521) pour maintenir le noyau de moulage (4), deux parois latérales longitudinales (51a, 51b) et une partie de fond (53) sur laquelle les deux parois latérales longitudinales (51a, 51b) sont placées de façon repliable pour ouvrir et fermer le moule extérieur (5) au moyen respectivement d'une ou plusieurs articulations (511),
sachant que le moule est agencé de telle manière que le tube en béton (1) peut être coulé selon la position de montage ultérieure du tube en béton (1), sachant que la partie de fond (53) est constituée en tant que forme négative du pied de tube en béton sur la face inférieure (9a) du tube en béton (1), et
sachant que les deux bords longitudinaux supérieurs (512a, 512b) des parois latérales (51a, 51b) sont constitués de telle sorte qu'avec le moule extérieur (5) fermé, un volume de remplissage agissant en tant que zone de compensation de remplissage pour le béton est préparé dans l'intervalle situé entre les deux bords longitudinaux supérieurs (512a, 512b) des parois latérales (51a, 51b).
